# EUROPÄISCHE PATENTSCHRIFT

(11) **EP 2 509 697 B1**
(45) Veröffentlichungstag und Bekanntmachung des Hinweises auf die Patenterteilung: **06.11.2013**
(21) Anmeldenummer: 10805700.1
(22) Anmeldetag: 07.12.2010
(51) Int. Cl.: B01D 35/153, B01D 35/147

(54) **FLÜSSIGKEITSFILTER**
LIQUID FILTER
FILTRE À LIQUIDE

(30) Priorität: 10.12.2009 DE 102009054523
(43) Veröffentlichungstag der Anmeldung: 17.10.2012
(73) Patentinhaber: Hengst GmbH & Co. KG, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2010/069067
(87) Internationale Veröffentlichungsnummer: WO 2011/070011

(56) Entgegenhaltungen:
- EP-B1- 1 229 985
- DE-A1-102007 009 352
- DE-U1-202007 001 227

## Beschreibung

Die Erfindung betrifft einen Flüssigkeitsfilter, insbesondere Ölfilter einer Brennkraftmaschine, mit einem Filtergehäuse, mit einem darin auswechselbar angeordneten Ringfiltereinsatz und mit einem das Filtergehäuse im Betrieb verschließenden, abnehmbaren Deckel, wobei das Filtergehäuse zumindest einen in eine Rohseite des Filtergehäuses mündenden Zulauf für zu filternde Rohflüssigkeit und einen von einer Reinseite des Filtergehäuses ausgehenden Rücklauf für gefilterte Reinflüssigkeit aufweist, wobei in einem Boden des Filtergehäuses eine exzentrische Öffnung angeordnet ist, wobei der Filtereinsatz aus einem stirnseitig von Stirnscheiben eingefassten hohlzylindrischen Filterstoffkörper besteht und die Rohseite und die Reinseite voneinander trennt, wobei an der dem Boden zugewandten Stirnscheibe ein exzentrisches Sperrelement für die exzentrische Öffnung angeordnet ist, wobei am Ringfiltereinsatz und am Filtergehäuse zusammenwirkende Positioniermittel vorgesehen sind, die beim Einsetzen des Ringfiltereinsatzes in das Filtergehäuse das Sperrelement in Eingriff mit der exzentrischen Öffnung führen, wobei das erste Positioniermittel eine schiefe Ebene ist, wobei das zweite Positioniermittel eine radial vorragende Nase ist, die in Gegenüberstellung zur schiefen Ebene angeordnet ist, und wobei unter Verdrehung des Ringfiltereinsatzes zum Filtergehäuse die schiefe Ebene und die Nase relativ zueinander aneinander entlang gleitend bewegbar sind und das Sperrelement in Eingriff mit der exzentrischen Öffnung führen. Außerdem betrifft die Erfindung einen Ringfiltereinsatz für einen Flüssigkeitsfilter.

Ein Flüssigkeitsfilter und ein Ringfiltereinsatz der vorstehend genannten Art sind aus DE 20 2007 001 227 U1 bekannt. Dieses Dokument zeigt eine Anordnung der Positioniermittel in Form einer schiefen Ebene und einer damit zusammenwirkenden Nase auf dem Außenumfang des Filtereinsatzes und auf dem Innenumfang des Filtergehäuses.

Ein weiterer Flüssigkeitsfilter ist aus DE 39 036 675 C2 bekannt. Diese Schrift zeigt einen Ölfilter mit einem Filtergehäuse und einem darin auswechselbar angeordneten Ringfiltereinsatz. Der Ringfiltereinsatz hat an seiner unteren Stirnscheibe einen exzentrischen Zapfen als Verschluss für einen exzentrisch im Boden des Filtergehäuses vorgesehenen Ablauf, der bei einem Filtereinsatzwechsel eine Entleerung des Filtergehäuses ermöglicht. Am Ringfiltereinsatz und am Filtergehäuse sind zusammenwirkende Positioniermittel vorgesehen, die ein axiales Einführen des Filtereinsatzes nur in einer den Zapfen auf die Öffnung des Ablaufs ausrichtenden Lage gestatten. Vorzugsweise sind die Positioniermittel axial ineinander greifende, aufeinander abgestimmte Nut- und Federmittel, wobei die Feder als radial nach innen vorspringende Rippe im Filtergehäuse und die Nut im Umfang der unteren Stirnscheibe des Ringfiltereinsatzes vorgesehen ist.

Als nachteilig ist bei diesem bekannten Filter anzusehen, dass eine Bedienungsperson beim Einbau des Ringfiltereinsatzes in das Filtergehäuse die korrekte Verdrehstellung zwischen diesen beiden Teilen aktiv herstellen muss, wobei erfahrungsgemäß leicht Fehler auftreten können.

Ein weiterer einschlägiger Flüssigkeitsfilter ist aus EP 1 229 985 B1 bekannt. Diese Schrift zeigt ebenfalls einen Flüssigkeitsfilter mit Filtergehäuse und Ringfiltereinsatz. Der Ringfiltereinsatz hat an seiner unteren Stirnscheibe einen exzentrischen Zapfen zum Verschließen eines exzentrisch im Boden des Filtergehäuses angeordneten Ablaufs, durch den das Filtergehäuse bei einem Wechsel des Filtereinsatzes entleert wird. Am Boden des Filtergehäuses ist eine kreisförmig verlaufende, nach oben weisende, in Richtung zum Ablauf abfallende Rampe ausgebildet, über die der Zapfen unter Drehung des Ringfiltereinsatzes um sich selbst in den Ablauf gleitet.

Nachteilig ist hier, dass der Boden des Filtergehäuses mit der Rampe belegt ist und so die Anordnung anderer für die Funktion des Flüssigkeitsfilters benötigter Elemente, wie Kanäle oder Ventile, erschwert oder sogar unmöglich macht.

Ein weiterer Flüssigkeitsfilter ist in DE 103 53 424 A1 beschrieben. Auch bei diesem Flüssigkeitsfilter besitzt der zugehörige Ringfiltereinsatz an seiner unteren Stirnscheibe einen exzentrischen Zapfen als erstes Steckverschlusselement zum Verschließen eines Ablaufs als zweites Steckverschlusselement. Weiter sind am Ringfiltereinsatz und am Filtergehäuse zusammenwirkende Führungsmittel für eine schließfähige Ausrichtung der beiden Steckverschlusselemente vorgesehen, wobei die Führungsmittel und die Steckverschlusselemente voneinander getrennt ausgeführt sind. Vorzugsweise ist das eine Führungsmittel eine kreisrunde Führungsbahn mit einer umfangsmäßigen Unterbrechung in Form eines axialen Schlitzes und das andere Führungsmittel ein in den axialen Schlitz einschiebbarer Anschlag. Die Führungsbahn kann dabei geneigt sein, vorzugsweise mit einer der Gewindesteigung eines Schraubdeckels des Filtergehäuses entsprechenden Steigung. Die Führungsbahn ist vorzugsweise an der Unterseite der unteren Stirnscheibe des Ringfilterelementes vorgesehen.

Dieser bekannte Filtereinsatz wird durch das Führungsmittel merklich in seiner Baugröße verlängert, was bei Erhaltung der Filterfläche ein vergrößertes Filtergehäuse erfordert oder bei gleich bleibender Größe des Filtergehäuses zu einer Verkleinerung der Filterfläche des Filtereinsatzes führt.

Für die vorliegende Erfindung stellt sich daher die Aufgabe, einen Flüssigkeitsfilter und einen Ringfiltereinsatz der eingangs genannten Art zu schaffen, welche eine effiziente und vereinfachte selbsttätige eingriffsgerechte Positionierung von Sperrelement und Ablauf beim Einbau des Ringfiltereinsatzes in das Filtergehäuse gewährleisten.

Die Lösung dieser Aufgabe gelingt erfindungsgemäß mit einem Flüssigkeitsfilter der eingangs genannten Art, der dadurch gekennzeichnet ist,
dass a) die schiefe Ebene auf dem Außenumfang eines im Inneren des Ringfiltereinsatzes liegenden Filtergehäuseteils und die radial vorragende Nase auf dem Innenumfang des Ringfiltereinsatzes ausgebildet oder angeordnet sind oder
dass b) die schiefe Ebene auf dem Innenumfang des Ringfiltereinsatzes und die radial vorragende Nase auf dem Außenumfang des im Inneren des Ringfiltereinsatzes liegenden Filtergehäuseteils ausgebildet oder angeordnet sind
und
dass die exzentrische Öffnung ein Ablauf zum Entleeren des Filtergehäuses bei Entnahme des Filtereinsatzes ist.

Mit der Erfindung wird vorteilhaft erreicht, dass die Anordnung der Positioniermittel auf dem Innenumfang des Ringfiltereinsatzes und auf dem Außenumfang des im Inneren des Ringfiltereinsatzes liegenden Filtergehäuseteils bei vorgegebener Höhe des Filters, insbesondere auch bei niedrigen Filtern, problemlos eine starke, eine Selbsthemmung ausschließende Steigung erlaubt. Hiermit wird erreicht, dass der Filtereinsatz praktisch allein durch die Schwerkraft in seine eingriffsgerechte Verdrehstellung für das Sperrelement relativ zum Ablauf gelangt. Insbesondere ist es nicht erforderlich, dass über den, üblicherweise schraubbaren, Deckel ein begrenztes Drehmoment auf den Ringfiltereinsatz übertragen wird.

Vorteilhaft ist weiter, dass der Boden des Filtergehäuses vollständig von den Positioniermitteln freigehalten wird. Hierdurch wird eine große konstruktive Freiheit bei der Anordnung von weiteren Elementen des Flüssigkeitsfilters im Bereich des Bodens des Filtergehäuses erreicht. Da die Positioniermittel auf einander gegenüberliegenden Innen- und Außenumfängen des Filtergehäuses einerseits und des Ringfiltereinsatzes andererseits angeordnet sind, können sie nicht zu einer Vergrößerung der Bauhöhe des Flüssigkeitsfilters führen. Zudem können die Positioniermittel mit einer in Radialrichtung gesehen sehr kleinen Baugröße ausgeführt werden, so dass auch keine Vergrößerung des Durchmessers des Filtergehäuses oder eine Verkleinerung des Durchmessers des Ringfiltereinsatzes zur Unterbringung der Positioniermittel erforderlich wird. Der Ringfiltereinsatz kann in jeder beliebigen Verdrehstellung relativ zum Filtergehäuse in dieses eingesetzt werden. Sobald die Positioniermittel in Kontakt miteinander gelangen, führen sie unter der gegebenenfalls erforderlichen Drehung des Ringfiltereinsatzes um sich selbst das daran angeordnete Sperrelement eingriffsgerecht zum Ablauf. Eine besondere Aufmerksamkeit der den Filtereinsatz einbauenden Bedienungsperson ist hier nicht erforderlich, wodurch Einbaufehler praktisch ausgeschlossen werden.

Eine bevorzugte Weiterbildung der Erfindung schlägt vor, dass die schiefe Ebene durch zwei gegensinnig aufeinander zu laufende, sich jeweils über den halben Innenumfang des Ringfiltereinsatzes oder den halben Außenumfang des im Inneren des Ringfiltereinsatzes liegenden Filtergehäuseteils erstreckende Teilebenen gebildet ist. Mit dieser Ausgestaltung der schiefen Ebene gelingt das eingriffsgerechte Zusammenführen von Sperrelement und Ablauf mit der minimal möglichen Verdrehung des Ringfiltereinsatzes, da dieser maximal eine halbe Umdrehung ausführen muss. Dies erleichtert und beschleunigt das Einbauen des Filtereinsatzes in das Filtergehäuse nochmals.

Bei bestimmten Ausführungen von Ablauf und Sperrelement ist ein rein axiales Zuführen des Sperrelementes auf oder in den Ablauf erforderlich. Für diese Fälle ist vorgesehen, dass sich an das untere Ende der schiefen Ebene eine in Axialrichtung laufende Führung für die Nase anschließt. Bei dieser Ausgestaltung wird also zunächst die eingriffsgerechte Verdrehstellung des Filtereinsatzes hergestellt, woran sich eine axiale Bewegung anschließt, die den Eingriff zwischen Sperrelement und Ablauf herstellt, ohne dass diese Eingriffsbewegung noch mit einer Rotationsbewegung überlagert wird.

Eine diesbezügliche Weiterbildung schlägt vor, dass die in Axialrichtung laufende Führung für die Nase im Anschluss an die schiefe Ebene zunächst einen ersten Führungsabschnitt mit einer Breite aufweist, die um wenigstens 50 % größer als die Breite der Nase ist, und dass der erste Führungsabschnitt in einen anschließenden zweiten Führungsabschnitt übergeht mit einer Breite, die der Breite der Nase zuzüglich eines für ein klemmfreies Verschieben der Nase in dem zweiten Führungsabschnitt ausreichenden Bewegungsspiels entspricht. Der erste, breitere Führungsabschnitt sorgt hier im Zusammenwirken mit der Nase zunächst für ein Vorpositionieren des Sperrelements relativ zum Ablauf, wonach dann der zweite, engere Führungsabschnitt die Feinpositionierung des Sperrelements relativ zum Ablauf vornimmt. Dabei ist der Übergang vom ersten Führungsabschnitt zum zweiten Führungsabschnitt vorzugsweise trichterförmig ausgebildet, um ein günstiges Führen der Nase zu gewährleisten

Zur Erzielung einer gleichzeitig technisch einfachen und betrieblich zuverlässigen Konstruktion sind vorzugsweise die schiefe Ebene oder deren Teilebenen jeweils durch eine radial vorstehenden, ober- oder unterseitig eine Gleitbahn für die Nase bildende Rippe oder Stufe gebildet.

Eine insbesondere herstellungstechnisch günstige Lösung wird erreicht, wenn die schiefe Ebene einstückig mit dem Filtergehäuse oder mit dem Ringfiltereinsatz ausgeführt ist. Diese Ausführung erlaubt eine kostengünstige Massenfertigung des Flüssigkeitsfilters und des zugehörigen Ringfiltereinsatzes, was dann zweckmäßig ist, wenn große Stückzahlen gefertigt werden müssen, wie dies beispielsweise bei Ölfiltern für Brennkraftmaschinen der Fall ist.

Alternativ besteht auch die Möglichkeit, dass die schiefe Ebene als separates Teil gefertigt und mit dem Filtergehäuse oder mit dem Ringfiltereinsatz verbunden ist. Diese Ausführung erlaubt insbesondere eine wahlweise Ausrüstung des Filtergehäuses oder des Ringfiltereinsatzes mit einer schiefen Ebene, wobei vorteilhaft bereits vorhandene, gängige Filtergehäuse und Filtereinsätze weiterhin verwendbar sind.

Da die Nase als eines der Positioniermittel nur eine geringe Größe haben muss, ist zweckmäßig die Nase einstückig mit dem Filtergehäuse oder mit dem Ringfiltereinsatz ausgeführt. Neben einer günstigen Herstellung wird so auch eine geringe Empfindlichkeit der Nase gegen Schäden erreicht.

Je nach Ausgestaltung des Ablaufs in Filtergehäuse kann in Anpassung daran das Sperrelement unterschiedlich ausgeführt sein. Beispielsweise kann das Sperrelement ein starr an der unteren Stirnscheibe angeordnetes radial oder axial dichtendes Ventilelement oder ein starr an der unteren Stirnscheibe angeordneter radial dichtender Stopfen sein. Diese Ausführungen sind herstellungstechnisch besonders einfach und mechanisch besonders robust.

In einer alternativen, zweiten Ausführung ist das Sperrelement ein federnd an der unteren Stirnscheibe angeordnetes axial dichtendes Ventilelement. In dieser Ausführung wird die Möglichkeit eines selbsttätigen Ausgleichs von Fertigungstoleranzen und temperaturbedingten Längenänderungen des Filtereinsatzes und des Filtergehäuses geschaffen.

Der im Boden des Filtergehäuses angeordnete Ablauf kann unterschiedlich gestaltet sein. Vorzugsweise ist der Ablauf mit einem filtergehäuseseitig eingearbeiteten oder als separates Teil eingesetzten, zu dem Sperrelement passenden Sitz ausgeführt. Für einen filtergehäuseseitig eingearbeiteten Sitz ist in der Regel eine spanende Bearbeitung erforderlich. Wenn diese vermieden werden soll, kommt zweckmäßig ein Sitz in Form eines separaten Teils zum Einsatz, wobei dieser Sitz in den Ablauf zum Beispiel eingepresst oder eingerastet oder eingeklebt oder eingeschraubt werden kann.

Je nach Ausführung des Flüssigkeitsfilters kann ein Toleranzausgleich durch eine den Ringfiltereinsatz in Richtung nach unten, das heißt zum Boden des Filtergehäuses, oder in Richtung nach oben, das heißt zum Deckel, vorbelastende Kraft erfolgen. Für derartige Flüssigkeitsfilter schlägt die Erfindung vor, dass der im Inneren des Ringfiltereinsatzes liegende Filtergehäuseteil ein den Rücklauf enthaltender Rohrstutzen ist, der mit dem übrigen Filtergehäuse starr verbunden oder einstückig ist oder der in Axialrichtung beweglich im übrigen Filtergehäuse geführt und mit einer in Richtung zum Deckel weisenden Federkraft vorbelastet ist. Bei dem mit dem übrigen Filtergehäuse starr verbunden oder einstückigen Rohrstutzen kann der Filtereinsatz einfach an seiner Oberseite nach unten hin vorbelastet werden. Wenn der Ringfiltereinsatz in seinem eingebauten Zustand auf dem beweglich ausgeführten Rohrstutzen sitzt, wird der Filtereinsatz mittels des Rohrstutzens und zusammen mit diesem in Richtung zum Deckel mit der Vorbelastungskraft beaufschlagt. Somit muss im Filtergehäuse in beiden hier angesprochenen Ausführungen im Bereich zwischen dessen Boden und der Unterseite des Ringfiltereinsatzes keine Feder angeordnet werden, die, wie ein dort angeordnetes Positioniermittel, zu konstruktiven Einschränkungen führen könnte.

In die Herstellungskosten eines Flüssigkeitsfilters gehen die Montagezeiten als wichtiger Kostenfaktor ein. Um den Herstellungsaufwand und die Montagezeit bei der Fertigung des erfindungsgemäßen Flüssigkeitsfilters gering zu halten, ist vorgesehen, dass der Rohrstutzen mit einem zum Sperrelement passenden Sitz verbunden oder einstückig ausgeführt ist, welcher achsparallel zum Rohrstutzen in den Ablauf eingesetzt ist. In dieser Ausführung können der Rohrstutzen und der Sitz in einem gemeinsamen Montageschritt in das Filtergehäuse eingebaut werden.

Insbesondere bei Brennkraftmaschinen von Kraftfahrzeugen besteht das Bestreben, zur Brennkraftmaschine gehörende Komponenten zu Modulen zusammenzufassen. So ist es beispielsweise grundsätzlich bekannt, einen Ölfilter mit einem Wärmetauscher als Ölkühler in einem Modul zu kombinieren, wobei der Wärmetauscher mit dem Flüssigkeitsfilter meistens in Reihe geschaltet ist. Da ein Wechsel eines Ölfiltereinsatzes in der Regel mit einem Ölwechsel verbunden wird, soll möglichst wenig verschmutztes Restöl im Ölfilter und im Ölkühler verbleiben. Für diese spezielle Anordnung schlägt die Erfindung einen Flüssigkeitsfilter vor, der dadurch gekennzeichnet ist, dass der Ablauf in Ablaufrichtung gesehen drei Ablaufabschnitte mit jeweils kleinerem Durchmesser aufweist, wobei in den Ablaufabschnitt mit dem kleinsten Durchmesser ein Ablaufzweigkanal einer dem Flüssigkeitsfilter zugeordneten, die selbe Flüssigkeit führenden Komponente einmündet, dass im Ablauf ein Rohrstück axial verschieblich angeordnet und mit einer zum Deckel weisenden Federkraft vorbelastet ist, wobei das Rohrstück an seinem oberen Ende einen zum Sperrelement passenden Sitz und an seinem unteren Ende eine erste, obere Radialdichtung trägt, dass das Rohrstück einen sich von seinem unteren Ende axial nach unten erstreckenden Fortsatz aufweist, der an seinem unteren Ende eine zweite, untere Radialdichtung trägt, wobei die Radialdichtungen voneinander axial beabstandet mit den Ablaufabschnitten mit den zwei kleineren Durchmessern dichtend zusammenwirken und wobei bei Bewegung des Rohrstücks aus einer tiefsten Grundstellung nach oben bei Abnehmen des Deckels zuerst die untere Radialdichtung aus dem Ablaufabschnitt mit dem kleinsten Durchmesser in den Ablaufabschnitt mit dem mittleren Durchmesser überführt wird, während die obere Radialdichtung in dem Ablaufabschnitt mit dem mittleren Durchmesser verbleibt. Hiermit wird bewirkt, dass bei einem Herausnehmen des Ringfiltereinsatzes aus dem Gehäuse das Rohrstück durch die Federkraft angehoben wird, wodurch zunächst ein Abfluss von Flüssigkeit aus der zugehörigen Komponente, wie Wärmetauscher, in den Ablauf freigegeben wird. Erst wenn auch das Sperrelement von dem am oberen Ende des Rohrstücks angeordneten Sitz abgehoben ist, läuft die im Filtergehäuse befindliche Flüssigkeit ebenfalls in den Ablauf.

Bei allen Ausführungen des zuvor beschriebenen Flüssigkeitsfilters kann der Ringfiltereinsatz separat in das Gehäuse eingesetzt oder aus dem Filtergehäuse herausgenommen werden. Alternativ und wegen der besseren Sauberkeit des Arbeitens bevorzugt kann der Ringfiltereinsatz auch, wie an sich bekannt, mit dem Deckel des Filtergehäuses zur Übertragung von axialen Kräften, jedoch verdrehbar, verbunden sein, beispielsweise mittels einer Rastverbindung. Somit kann der Filtereinsatz zusammen mit dem Deckel vom Filtergehäuse gelöst und aus dem Filtergehäuse entnommen sowie umgekehrt auch eingebaut werden.

Es ist im Rahmen der Erfindung auch denkbar, dass mehrere Fluidleitungen oder -kanäle exzentrisch im Boden des Filtergehäuses angeordnet sind und dass diese Fluidleitungen oder -kanäle über mehrere entsprechend angeordnete, exzentrische Sperrelemente am Filtereinsatz verschlossen werden. Mindestens eine dieser Fluidleitungen kann auch als Zulauf in das Filtergehäuse ausgeführt sein, wobei dann das Sperrelement z.B. als Rücklaufsperrventilelement ausgeführt sein kann.

Ebenso ist es im Rahmen der Erfindung denkbar, dass exzentrische Leitungen zur Energieübertragung und/oder Signalübertragung am Boden des Filtergehäuses angeordnet sind und dass diese mit entsprechend angeordneten, exzentrischen Leitungen am Filtereinsatz in Kontakt gebracht werden.

Gegenstand der Erfindung ist weiterhin ein Ringfiltereinsatz mit den im Patentanspruch 15 angegebenen Merkmalen. Der erfindungsgemäße Ringfiltereinsatz weist die für das Zusammenwirken mit und den Einsatz in einem Flüssigkeitsfilter der vorstehend beschriebenen Art nötigen und zweckmäßigen spezifischen Merkmale auf.

Vorteilhafte Ausgestaltungen und Weiterbildungen des Ringfiltereinsatzes sind in den Ansprüchen 16 bis 28 angegeben.

Im Folgenden werden Ausführungsbeispiele der Erfindung anhand einer Zeichnung erläutert. Die Figuren der Zeichnung zeigen:
- Figur 1 bis 6: ein erstes Beispiel eines Flüssigkeitsfilters in verschiedenen Darstellungen,
- Figur 7 bis 11: ein zweites Ausführungsbeispiel des Flüssigkeitsfilters in verschiedenen Darstellungen,
- Figur 12 bis 16: ein drittes Ausführungsbeispiel des Flüssigkeitsfilters in verschiedenen Darstellungen,
- Figur 17 bis 20: ein viertes Ausführungsbeispiel des Flüssigkeitsfilters in verschiedenen Darstellungen,
- Figur 21 bis 25: ein fünftes Ausführungsbeispiel des Flüssigkeitsfilters in verschiedenen Darstellungen,
- Figur 26 bis 28: ein sechstes Ausführungsbeispiel des Flüssigkeitsfilters in verschiedenen Darstellungen,
- Figur 29 bis 32: ein siebtes Ausführungsbeispiel des Flüssigkeitsfilters in verschiedenen Darstellungen,
- Figur 33 bis 36: ein achtes Ausführungsbeispiel des Flüssigkeitsfilters in verschiedenen Darstellungen, und
- Figur 37: einen Rohrstutzen mit schiefer Ebene als Einzelteil des Filtergehäuses, in Ansicht.

Gleiche Teile sind in den verschiedenen Figuren der Zeichnung mit gleichen Bezugsziffern versehen; daher werden nicht zu jeder Zeichnungsfigur alle Bezugsziffern erläutert.

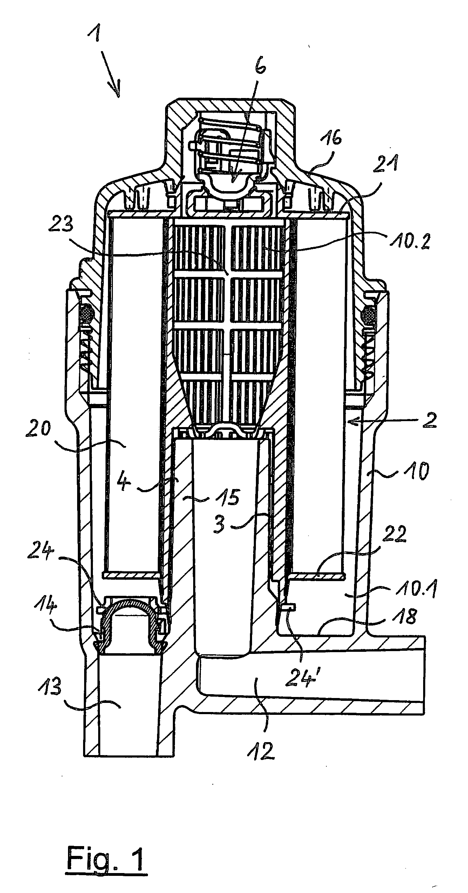

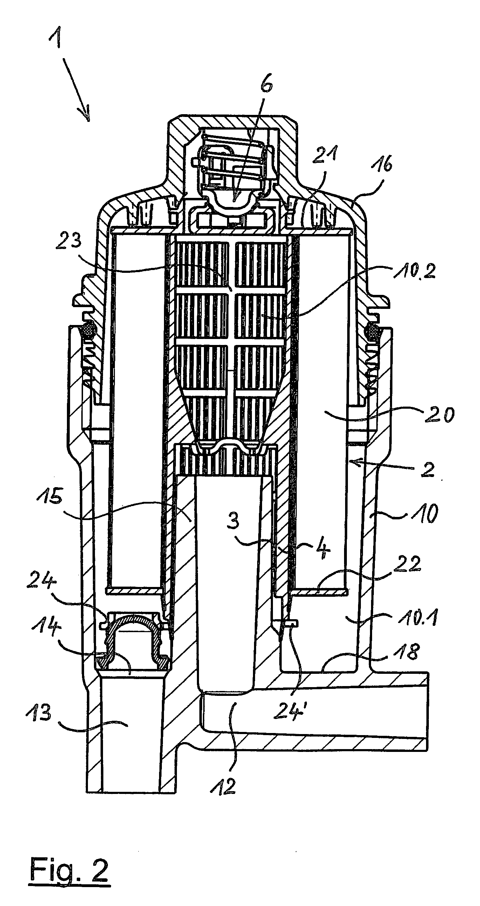

Die Figuren 1 bis 6 zeigen ein erstes Beispiel eines Flüssigkeitsfilters gemäß Erfindung. In den Figuren 1 und 2 ist der Flüssigkeitsfilter in zwei verschiedenen Zuständen im Längsschnitt gezeigt. Der Filter 1 umfasst ein Filtergehäuse 10, welches oberseitig mit einem Schraubdeckel 16 verschlossen ist. Im Inneren des Filtergehäuses 10 ist ein Ringfiltereinsatz 2 auswechselbar angeordnet. Der Ringfiltereinsatz 2 besteht aus einem Filterstoffkörper 20, der oben und unten von je einer Stirnscheibe 21, 22 eingefasst ist.

Durch einen in den Figuren 1 und 2 nicht sichtbaren Zulauf strömt eine zu filternde Flüssigkeit, beispielsweise Schmieröl einer Brennkraftmaschine, auf die Rohseite 10.1 des Filtergehäuses 10. Unter Durchströmen des Filterstoffkörpers 20 fließt die Flüssigkeit auf die Reinseite 10.2 des Filtergehäuses 10. Durch einen Rücklauf 12 strömt die gefilterte Flüssigkeit ab. Schmutzpartikel werden im Filterstoffkörper 20 zurückgehalten.

Weiterhin besitzt das Filtergehäuse 10 einen Ablauf 13, durch welchen bei einem Wechsel des Filtereinsatzes 2 eine Entleerung des Filtergehäuses 10 erfolgt. Im Betrieb des Filters 1 ist der Schraubdeckel 16 mit dem Filtergehäuse 10 dicht verschraubt. Hierdurch wird ein Sperrelement 24 dichtend gegen einen Sitz 14 im Ablauf 13 gedrückt. Das Sperrelement 24 ist über Federarme 24' mit der unteren Stirnscheibe 22 des Filtereinsatzes 2 verbunden oder einstückig ausgeführt. Im Zustand gemäß Figur 1 ist also der Ablauf 13 verschlossen.

Zur Sicherung des Filterstoffkörpers 20 gegen ein Kollabieren ist im Inneren des Filtereinsatzes 2 ein gitterförmiger Stützdom 23 angeordnet. Im zentralen oberen Teil des Deckels 16 ist ein Filterumgehungsventil 6 angeordnet.

Um beim Einbauen des Filtereinsatzes 2 in das Filtergehäuse 10 zu gewährleisten, dass das Sperrelement 24 exakt eingriffsgerecht zum Sitz 14 positioniert wird, sind Positioniermittel vorgesehen. Bei dem Beispiel nach Figur 1 und 2 bestehen diese aus einer schrägen Ebene 3 einerseits, die am Innenumfang des Ringfiltereinsatzes 2, genauer von dessen Stützdom 23, angeordnet ist. Das zweite Positioniermittel ist eine Nase 4, die an einem zentralen, von einem Boden 18 des Gehäuses 10 aufragenden und mit diesem einstückigen Rohrstutzen 15 an dessen Außenumfang angeformt ist, hier in Form einer länglichen vertikalen Rippe. Unabhängig von der Verdrehstellung, die der Filtereinsatz 2 zu Beginn seines Einführens in das Filtergehäuse 10 besitzt, führen die schiefe Ebene 3 und die Nase 4 als Positioniermittel den Ringfiltereinsatz 2 exakt in die eingriffsgerechte Verdrehstellung, in der das Sperrelement 24 in Eingriff mit dem Sitz 14 gelangt.

In Figur 2 ist der Flüssigkeitsfilter 1 aus Figur 1 mit teilweise losgedrehtem Deckel 16 dargestellt. Der Filtereinsatz 2 ist an seiner oberen Stirnscheibe 21 über Rastverbindungsmittel auf an sich bekannte Art mit dem Schraubdeckel 16 verrastet, so dass das Losdrehen des Deckels 16 zu einem Anheben des Filtereinsatzes 2 führt. Hierdurch wird auch das Sperrelement 24 als Teil der unteren Stirnscheibe 22 des Filtereinsatzes 2 mit angehoben und so von dem Sitz 14 am Ablauf 13 abgehoben. Auf diese Weise wird der Ablauf 13 geöffnet und die im Filtergehäuse 10 befindliche Flüssigkeit kann durch den Ablauf 13 abfließen, bei einem Ölfilter beispielsweise in den Ölsumpf einer zugehörigen Brennkraftmaschine. Danach kann ein weitestgehend flüssigkeitsfreier Filtereinsatz 2 aus dem Gehäuse 10 entnommen werden.

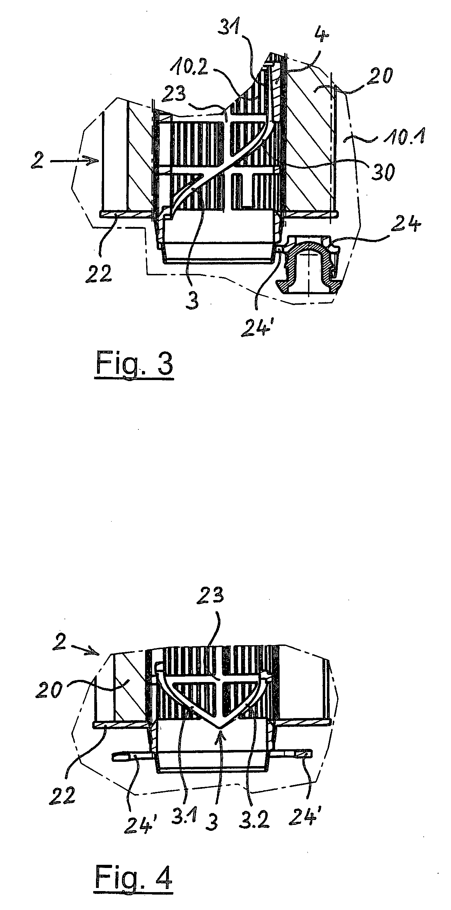

Figur 3 zeigt den Filtereinsatz 2 des Flüssigkeitsfilters 1 aus Figur 1 und 2 in einem Längsschnitt durch seinen unteren Teil. Radial außen ist der Filterstoffkörper 20 erkennbar, der nach unten hin durch die untere Stirnscheibe 22 abgeschlossen ist. Im Inneren des Filtereinsatzes 2 ist der Stützdom 23 angeordnet, an welchem auch die schiefe Ebene 3, die mit der Nase 4 auf der Seite des Rohrstutzens 15 gemäß Figur 1 und 2 zusammenwirkt, angeordnet ist. Hier ist die schiefe Ebene 3 mit ihrer unterseitigen Gleitfläche 30 einstückig mit dem Stützdom 23 ausgeführt. Am Ende der schiefen Ebene 3, hier oben rechts in Figur 3, schließt sich an die schiefe Ebene 3 eine axiale Führung 31 an, mit welcher am Ende der Positionierung des Filtereinsatzes 2 in Umfangsrichtung eine rein axiale Bewegung des Filtereinsatzes 2 bewirkt wird, mittels welcher das Sperrelement 24 axial in Eingriff mit dem zugehörigen Sitz 14 gebracht wird.

Figur 4 zeigt den Filtereinsatz 2 aus Figur 3 nun in einem um 90° gedrehten Teil-Längsschnitt. In Inneren des Filtereinsatzes 2 liegt wieder der Stützdom 23 mit der einstückig damit ausgeführten schiefen Ebene 3. Wie in Figur 4 weiter gut sichtbar ist, besteht die schiefe Ebene 3 aus zwei aufeinander zu laufenden Teilebenen 3.1 und 3.2. Mit der unteren Stirnscheibe 22 sind die Federarme 24' verbunden, die das in Figur 4 nicht sichtbare, vor der Schnittebene liegende Sperrelement 24 tragen.

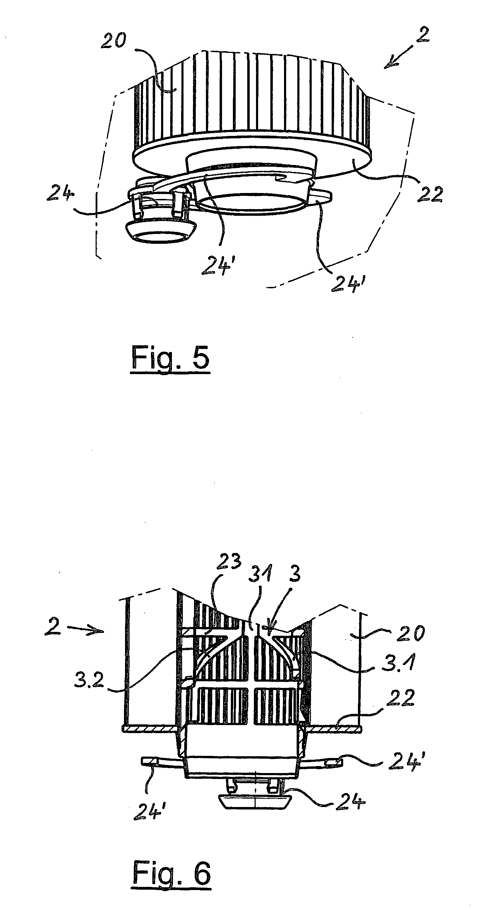

Figur 5 zeigt den Ringfiltereinsatz 1 gemäß Figur 3 und 4 in einer perspektivischen Unteransicht. Oben in Figur 5 ist der Filterstoffkörper 20 teilweise sichtbar, der unterseitig von der unteren Stirnscheibe 22 abgedeckt ist. In ihrem Zentrum besitzt die Stirnscheibe 22 eine Durchbrechung zum Aufsetzen auf den Rohrstutzen 15 gemäß Figur 1 und 2. Mit der Stirnscheibe 22 sind die zwei Federarme 24' einstückig ausgebildet, die das Sperrelement 24 tragen. Hierdurch ist das Sperrelement 24 in Axialrichtung federnd, wodurch Längentoleranzen ausgeglichen werden. Weiterhin ist hier das Sperrelement 24 zweiteilig ausgebildet, wobei die beiden Teile miteinander verrastet sind, um auch einen Ausgleich von radialen Maßtoleranzen und Winkelfehlern zu gewährleisten, wenn das Sperrelement 24 mit dem Sitz 14 in Eingriff gebracht wird.

Figur 6 zeigt einen weiteren Teil-Längsschnitt durch den Filtereinsatz 2, nun mit einer gegenüber Figur 4 um 180° gedrehten Schnittebene. Im Zentrum des Filtereinsatzes 2 ist wieder die schiefe Ebene 3 mit ihren beiden Teilebenen 3.1 und 3.2 sichtbar. An ihrem in Figur 6 oben liegenden Ende gehen die Teilebenen 3.1 und 3.2 in eine axiale Führung 31 über.

Unten in Figur 6 ist die untere Stirnscheibe 22 des Filtereinsatzes 2 sichtbar. Darunter verlaufen die Federarme 24', die das Sperrelement 24 tragen.

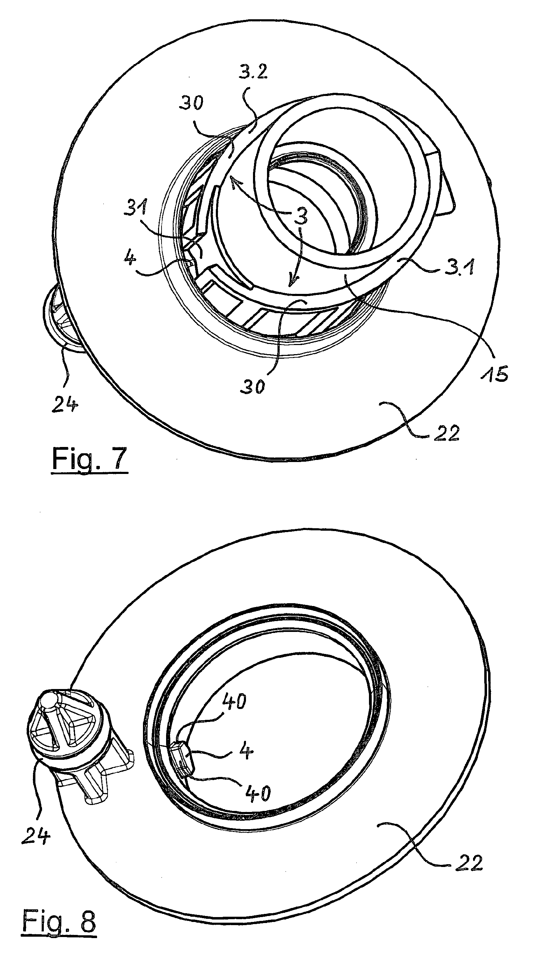

Die Figuren 7 bis 11 zeigen ein zweites Ausführungsbeispiel der Erfindung, für das charakteristisch ist, dass die schiefe Ebene 3 an einem Rohrstutzen 15 vorgesehen ist, der axial verschieblich zentral im Filtergehäuse 10 des Flüssigkeitsfilters 1 angeordnet und mittels einer Feder 15' in Richtung nach oben vorbelastet ist. Alternativ kann der Rohrstutzen 15 auch axial lagefest mit dem übrigen Filtergehäuse verbunden sein.

Figur 7 zeigt zunächst nur den Rohrstutzen 15 und die untere Stirnscheibe 22 des Filtereinsatzes 2 als Einzelteile, um deren Zusammenwirken zu veranschaulichen. Die schiefe Ebene 3 besteht auch bei dem Beispiel nach Figur 7 aus zwei aufeinander zu laufenden Teilebenen 3.1 und 3.2, die an ihrem unteren Ende in eine axiale Führung 31 übergehen. Die Oberseite der Teilebenen 3.1 und 3.2 bildet jeweils eine Gleitbahn 30 für eine Nase 4, die am Innenumfang der Stirnscheibe 22 angeformt ist. Wenn bei einem Einbauen des Filtereinsatzes 2 dieser eine für den Eingriff des Sperrelementes 24 in den zugehörigen Sitz 14 nicht passende Verdrehstellung aufweist, trifft die Nase 4 zunächst auf die schiefe Ebene 3, hier auf eine ihrer Teilebenen 3.1 oder 3.2. Bei weiterer Bewegung nach unten wird die Stirnscheibe 22 durch die auf der schiefen Ebene 3 gleitende Nase 4 zwangsweise in die richtige Verdrehstellung gebracht, in welcher sie in Figur 7 gezeigt ist. In dieser richtigen, für das Sperrelement 24 eingriffsgerechten Stellung relativ zum Ablauf liegt die Nase 4 in der sich an die schiefe Ebene 3 anschließenden axialen Führung 31. Dabei hat die Nase 4 in Umfangsrichtung der Stirnscheibe 22 gesehen eine Breite, die der Breite der axialen Führung 31 zuzüglich eines für ein klemmfreies Verschieben der Nase 4 in der Führung 31 nötigen Bewegungsspiels entspricht.

Figur 8 zeigt die Stirnscheibe 22 aus Figur 7 in einer Unteransicht als Einzelteil. Im Zentrum der Stirnscheibe 22 liegt die Durchbrechung, an deren Innenumfang die Nase 4 mit zwei schräg angeordneten Gleitflächen 40 angeformt ist. Links in Figur 8 ist das hier mit der Stirnscheibe 22 einstückige und starre Sperrelement 24 sichtbar.

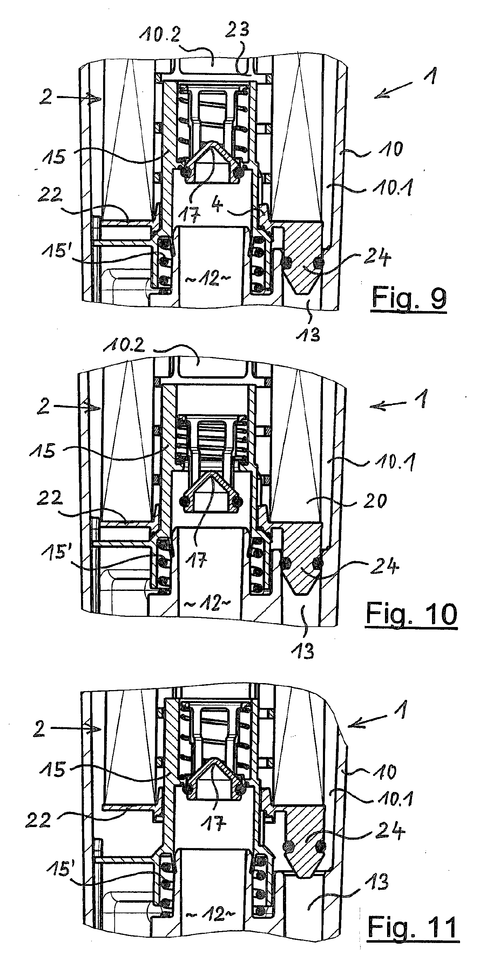

Die Figuren 9 bis 11 zeigen jeweils im Teil-Längsschnitt drei verschiedene Zustände des Flüssigkeitsfilters 1, der mit einem Rohrstutzen 15 und einer unteren Stirnscheibe 22 seines Filtereinsatzes 2 gemäß den Figuren 7 und 8 ausgestattet ist.

In Figur 9 befindet sich der Filtereinsatz 2 im Filtergehäuse 10 in seiner tiefsten Stellung, die er im normalen Betrieb des Flüssigkeitsfilters 1 einnimmt. Das Sperrelement 24 sitzt hier im Ablauf 13 und verschließt diesen, solange die zu filternde Flüssigkeit nicht unter Druck steht.

Wenn die Flüssigkeit im Flüssigkeitsfilter 1 unter Druck auf die Rohseite 10.1 geführt wird, strömt die Flüssigkeit durch den Filterstoffkörper 20 auf die Reinseite 10.2. Der Flüssigkeitsdruck auf der Reinseite 10.2 öffnet das Leerlaufsperrventil 17 und die gefilterte Flüssigkeit kann durch den Rücklauf 12 abströmen.

Figur 11 zeigt den Zustand des Flüssigkeitsfilters 1 zu Beginn eines Entnehmens des Filtereinsatzes 2, der hier schon um einen gewissen Weg nach oben hin bewegt ist. Hierdurch ist das Sperrelement 24 aus dem Ablauf 13 heraus bewegt, wodurch im Filtergehäuse 10 befindliche Flüssigkeit durch den Ablauf 13 abströmen kann. Da die Flüssigkeit im Gehäuse 10 nun nicht unter Druck steht, ist das Leerlaufsperrventil 17 nun wieder geschlossen. Noch nicht gefilterte Flüssigkeit von der Rohseite 10.1 kann so nicht in den Rücklauf 12 für gereinigte Flüssigkeit gelangen.

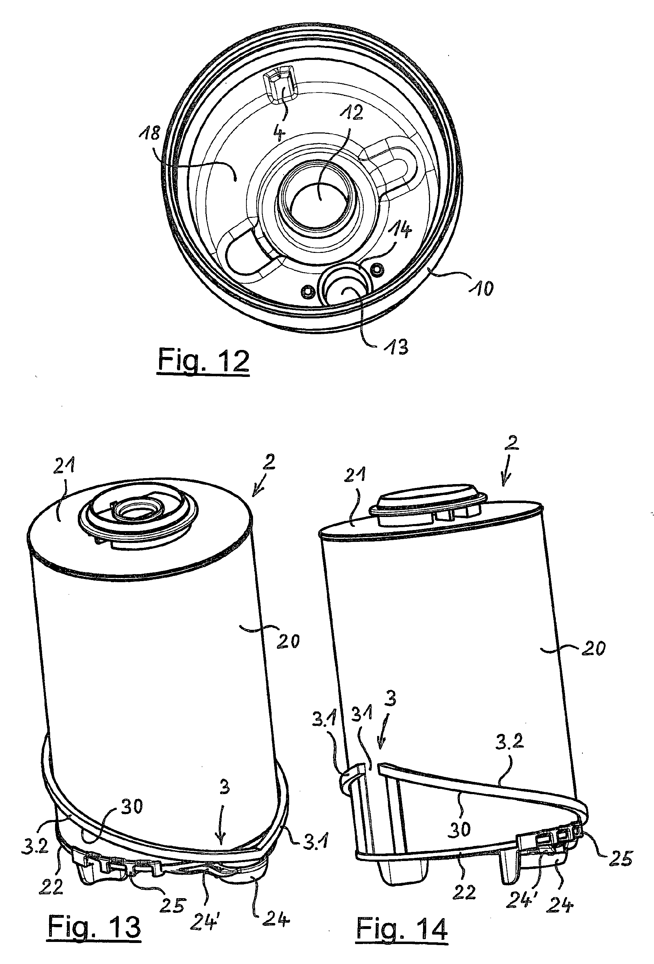

Die Figuren 12 bis 16 zeigen ein Ausführungsbeispiel, bei welchem die schiefe Ebene 3 auf dem Außenumfang des Filtereinsatzes 2 vorgesehen ist und wobei eine mit der schiefen Ebene 3 zusammen wirkende Nase 4 auf dem Innenumfang des Filtergehäuses 10 angeordnet ist.

Figur 12 zeigt zunächst einen Blick in das Innere des Filtergehäuses 10. Im Zentrum des Bodens 18 des Filtergehäuses 10 ist der Rücklauf 12 sichtbar. Radial außen davon, in Figur 12 darunter, liegt der Ablauf 13 mit dem Sitz 14 zum Zusammenwirken mit einem Sperrelement 24 an dem zugehörigen Ringfiltereinsatz 2. Oben in Figur 12 ist am Innenumfang des Filtergehäuses 10 die Nase 4 erkennbar, die hier einstückig angeformt ist.

Die Figuren 13 und 14 zeigen den zugehörigen Ringfiltereinsatz 2 in zwei verschiedenen perspektivischen Ansichten. Oben ist jeweils die obere Stirnscheibe 21 und unten jeweils die untere Stirnscheibe 22 sichtbar, die den Filterstoffkörper 20 zwischen sich einschließen. Um den Außenumfang des unteren Bereichs des Filtereinsatzes 2 herum ist die schiefe Ebene 3 angeordnet, die auch hier wieder aus zwei Teilebenen 3.1 und 3.2 besteht. Die Unterseite der Teilebenen 3.1 und 3.2 bildet jeweils eine Gleitbahn 30, die am Ende der schiefen Ebene 3 in die vertikale Führung 31 gemäß Figur 14 übergehen. Die schiefe Ebene 3 ist hier entweder einstückig mit der unteren Stirnscheibe 22 ausgeführt oder als Einzelteile nachträglich mit der unteren Stirnscheibe 22 verbunden.

Weiterhin ist bei diesem Ausführungsbeispiel das Sperrelement 24 nicht einstückig mit der unteren Stirnscheibe 22 ausgebildet, sondern mittels eines Anrastträgers 25 nachträglich mit der Stirnscheibe 22 verbunden.

Auch hier sorgt das Zusammenwirken von schiefer Ebene 3 und Nase 4 dafür, dass beim Einsetzen des Filtereinsatzes 2 in das Filtergehäuse 10 der Filtereinsatz 2 selbsttätig seine für das Sperrelement 24 eingriffsgerechte Verdrehposition relativ zu dem Sitz 14 am Ablauf 13 erreicht. Die Steigung der schiefen Ebene 3 ist dabei zweckmäßig so gewählt, dass keine Selbsthemmung bei der Bewegung und Drehung des Filtereinsatzes 2 während seines Einbaus in das Filtergehäuse 10 auftritt; der Filtereinsatz 10 fällt also praktisch von allein in seine richtige Position.

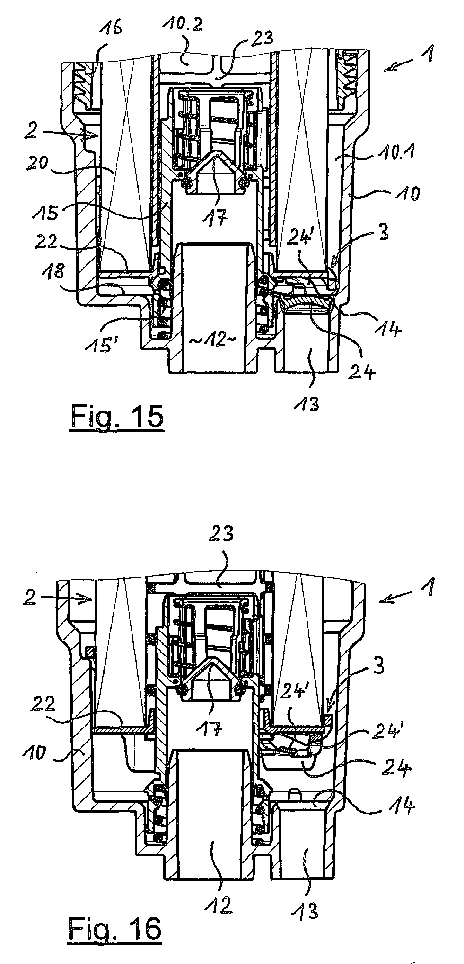

Die Figuren 15 und 16 zeigen zwei verschiedene Betriebszustände des Flüssigkeitsfilters 1 mit dem Filtergehäuse 10 und dem Filtereinsatzes 2 gemäß den Figuren 12 bis 14, jeweils im Teil-Längsschnitt.

In der Figur 15 ist der Deckel 16 fest mit dem Filtergehäuse 10 verschraubt und der Filtereinsatzes 2 befindet sich in seiner tiefsten Stellung im Filtergehäuse 10. In dieser Stellung liegt das Sperrelement 24 an dem Sitz 14 am Beginn des Ablaufs 13 an und verschließt diesen. Das in dem zentralen Rohrstutzen 15 auch hier vorgesehene Leerlaufsperrventil 17 bleibt geschlossen, solange die Flüssigkeit im Flüssigkeitsfilter 1 nicht unter Druck steht. Wenn die Flüssigkeit der Rohseite 10.1 unter Druck zugeführt wird, strömt sie durch den Filterstoffkörper 20 auf die Reinseite 10. 2 und öffnet das Leerlaufsperrventil 17, so dass die gefilterte Flüssigkeit durch den Rücklauf 12 abströmen kann. Mittels einer Feder 15' wird der axial bewegliche zentrale Rohrstutzen 15 mit einer nach oben weisenden Kraft beaufschlagt, um dort die obere, hier nicht sichtbare Stirnscheibe gegen den Deckel 16 anzudrücken und dort zur Trennung von Rohseite 10.1 und Reinseite 10. 2 abzudichten.

In Figur 16 ist der Filtereinsatz 2 um einen gewissen Weg nach oben hin angehoben, um ihn gegen einen neuen Filtereinsatz 2 zu tauschen. Hierdurch kommt das Sperrelement 24 von dem Sitz 14 am Ablauf 13 frei und der Ablauf 13 wird geöffnet, während das Leerlaufsperrventil 17 geschlossen ist. Hierdurch kann sämtliche im Filtergehäuse 10 befindliche Flüssigkeit durch den Ablauf 13 abfließen. Ganz rechts ist in Figur 15 und 16 am Ringfiltereinsatz 2 jeweils ein kleiner Teil der schiefen Ebene 3 sichtbar. Über die das Sperrelement 24 tragenden Federarme 24' werden auch hier Maßtoleranzen ausgeglichen.

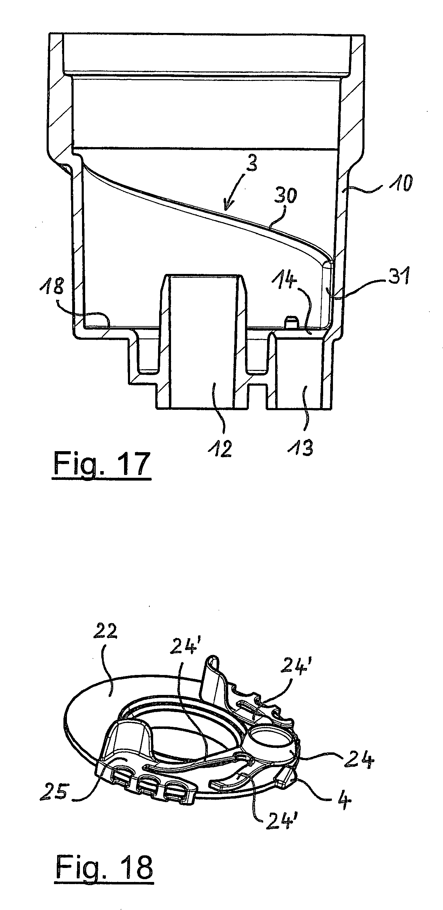

Die Figuren 17 bis 20 zeigen ein Beispiel des Flüssigkeitsfilters 1, bei dem die schiefe Ebene 3 am Innenumfang des Filtergehäuses 10 einstückig mit diesem ausgebildet ist und die mit der schiefen Ebene 3 zusammenwirkende Nase 4 am Außenumfang der unteren Stirnscheibe 22 des Ringfiltereinsatzes 2 angeordnet ist.

Figur 17 zeigt als Einzelteil das Filtergehäuse 10 im Längsschnitt, wobei die schiefe Ebene 3 hier als Stufe auf dem Innenumfang des Filtergehäuses 10 sichtbar ist. Die Oberseite der schiefen Ebene 3 bildet hier die Gleitbahn 30 für die damit zusammenwirkende Nase 4. Unten in Figur 17 ist der Boden 18 des Gehäuses 10 sichtbar, in dessen Zentrum der Rücklauf 12 und exzentrisch dazu der Ablauf 13 mit dem Sitz 14 für das damit zusammenwirkende Sperrelement 24 liegen.

Figur 18 zeigt die untere Stirnscheibe 22 des mit dem Filtergehäuse 10 gemäß Figur 17 kompatiblen Ringfiltereinsatzes 2 in einer Unteransicht. Hier ist das Sperrelement 24 wieder als separates Einzelteil mittels eines Anrastträgers 25 mit der übrigen Stirnscheibe 22 verbunden. Ein axiales Bewegungsspiel des Sperrelementes 24 relativ zur übrigen Stirnscheibe 22 wird auch hier durch die Federarme 24' gewährleistet. Einstückig mit der Stirnscheibe 22 ist an deren Außenumfang die Nase 4 angeformt, die mit der in Figur 17 sichtbaren schiefen Ebene 3 zusammenwirkt.

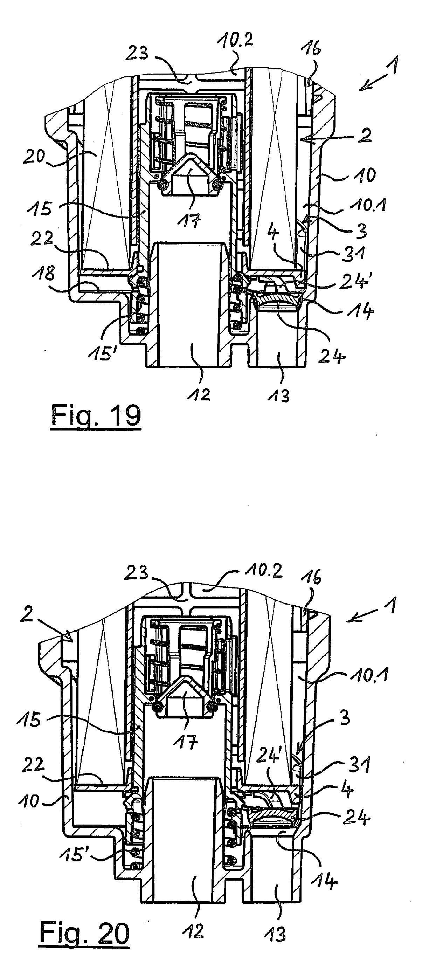

Die Figuren 19 und 20 zeigen einen Flüssigkeitsfilter 1 mit einem Filtergehäuse 10 und einer unteren Stirnscheibe 23 des Filtereinsatzes 2 gemäß den Figuren 17 und 18 in zwei verschiedenen Betriebszuständen, jeweils im Teil-Längsschnitt.

In Figur 19 ist der Ringfiltereinsatz 2 in seiner tiefsten Position im Gehäuse 10 dargestellt, die er im normalen Betrieb des Flüssigkeitsfilters 1 einnimmt. Mittels der schiefen Ebene 3 und der Nase 4 gelangt der Ringfiltereinsatz 2 bei seinem Einführen in das Filtergehäuse 10 zwangsläufig und exakt in die eingriffsgerechte Position für den Eingriff das Sperrelementes 24 in dem Sitz 14 am Ablauf 13.

Im Zentrum des Filtergehäuses 10 ist wieder ein axial beweglicher Rohrstutzen 15 mit einer diesen nach oben vorbelastenden Feder 15' angeordnet. Im Rohrstutzen 15 ist wieder ein Leerlaufsperrventil 17 vorgesehen, das in Figur 19 geschlossen dargestellt ist. Diese Schließstellung besteht, solange die Flüssigkeit im Filtergehäuse 10 drucklos ist. Wenn die Flüssigkeit unter Druck gesetzt wird, strömt sie von der Rohseite 10.1 durch den Filterstoffkörper 20 auf die Reinseite 10.2 und von dort durch das nun offene Leerlaufsperrventil 17 in den zentralen Rücklauf 12. Der Ablauf 13 ist währenddessen dicht verschlossen.

In Figur 20 ist der Ringfiltereinsatz 2 um einen gewissen Weg angehoben, wodurch das Sperrelement 24 von dem Sitz 14 am Ablauf 13 frei kommt und den Ablauf 13 öffnet. Da die Flüssigkeit nun drucklos ist, befindet sich das Leerlaufsperrventil 17 in Schließstellung. Somit strömt auch hier sämtliche Flüssigkeit aus dem Filtergehäuse 10 durch den Ablauf 13 ab.

Rechts in Figur 19 und 20 sind radial außen jeweils die schiefe Ebene 3 am Innenumfang des Gehäuses 10 sowie die Nase 4 an Außenumfang der unteren Stirnscheibe 22 des Filtereinsatzes 2 erkennbar.

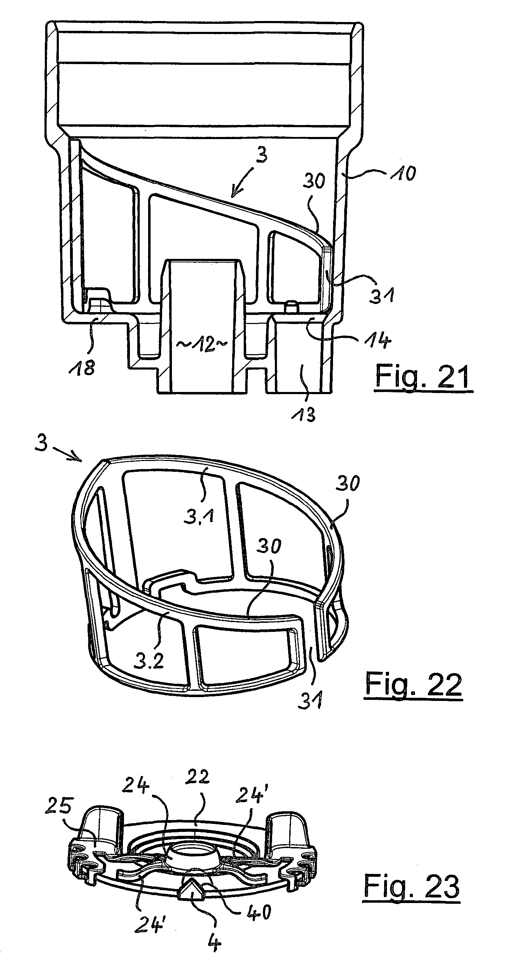

Die Figuren 21 bis 25 zeigen eine Ausführung des Filters, bei der im Filtergehäuse 10 die schiefe Ebene 3 als separates Teil angeordnet ist. Hierbei ist die schiefe Ebene 3 beispielsweise ein Spritzgussteil aus Kunststoff. Auch hier besteht die schiefe Ebene 3 aus den zwei Teilebenen 3.1 und 3.2, wie die Figur 23 zeigt, und die Oberseite der Teilebenen 3.1 und 3.2 bildet jeweils eine Gleitbahn 30 für eine Nase 4 am Außenumfang einer unteren Stirnscheibe 22 eines Filtereinsatzes 2. Eine entsprechende Ausführung der unteren Stirnscheibe 22 ist in Figur 23 in Ansicht auf ihre Unterseite dargestellt. Auch hier ist das Sperrelement 24 wieder mit Federarmen 24' getragen und mittels eines Anrastträgers 25 mit der übrigen Stirnscheibe 22 verbunden. An der dem Betrachter zugewandten Seite des Außenumfangs der Stirnscheibe 22 ist die Nase 4 mit zwei schräg verlaufenden Gleitflächen 40 angeformt.

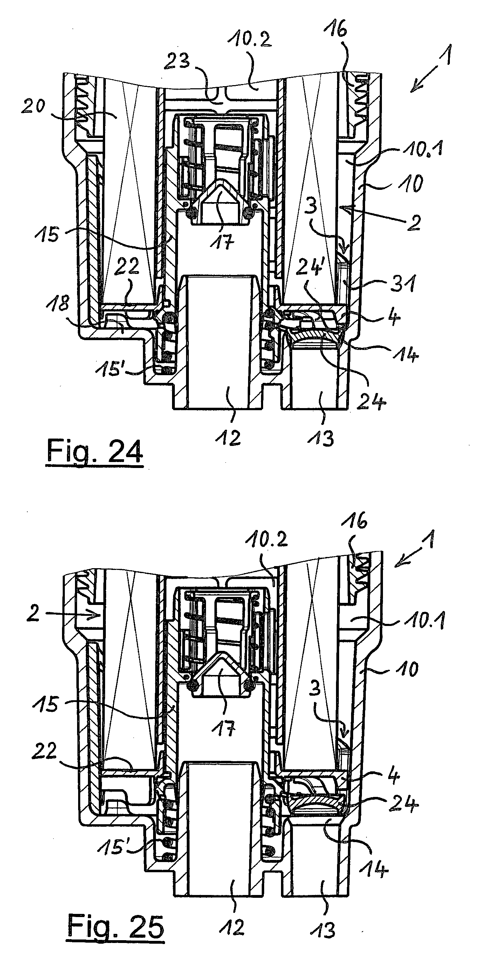

Die Figuren 24 und 25 zeigen jeweils im Teil-Längsschnitt einen Flüssigkeitsfilter 1 mit einem Filtergehäuse 10, einer separaten schiefen Ebene 3 und einer unteren Stirnscheibe 22 gemäß den Figuren 21 bis 23.

In Figur 24 ist der Flüssigkeitsfilter 1 wieder in einem Zustand gezeigt, in dem der Filtereinsatz 2 seine tiefste Stellung im Filtergehäuse 10 einnimmt und dadurch das Sperrelement 24 in dichtendem Eingriff mit dem Sitz 14 am Ablauf 13 hält.

In Figur 25 ist der Filtereinsatz 2 im Gehäuse 10 um einen gewissen Weg nach oben bewegt, wodurch das Sperrelement 24 nun vom Sitz 14 frei ist und der Ablauf 13 geöffnet ist.

Jeweils rechts am unteren Bereich des Innenumfangs des Gehäuses 10 ist die schiefe Ebene 3 und am Außenumfang der unteren Stirnscheibe 22 die mit der schiefen Ebene 3 zusammenwirkende Nase 4 erkennbar, welche die zusammenwirkenden Positioniermittel zur exakten, eingriffsgerechten Positionierung von Sperrelement 24 und Sitz 14 am Ablauf 13 bilden.

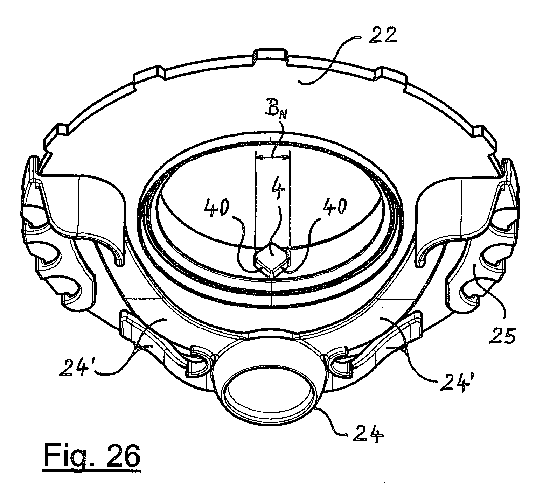

Die Figuren 26 bis 28 zeigen wieder ein Beispiel des Filters, bei dem die Nase 4 als Positioniermittel am Innenumfang der unteren Stirnscheibe 22 des Federeinsatzes 2 und die schiefe Ebene 3 als weiteres Positioniermittel am Außenumfang des zentralen Rohrstutzens 15 vorgesehen ist.

Figur 26 zeigt die untere Stirnscheibe 22 des Filtereinsatzes 2 in einer perspektivischen Unteransicht. In der zentralen Durchbrechung der Stirnscheibe 22 liegt an deren Innenumfang die einstückig angeformte Nase 4 mit ihren beiden Gleitflächen 40. Die Nase 4 hat eine Breite B_{N}, die der Breite der zugehörigen axialen Führung 31 zuzüglich eines nötigen Bewegungsspiels entspricht. Das Sperrelement 24 ist hier wieder mit Federarmen 24' gehalten und über einen Anrastträger 25 mit der übrigen Stirnscheibe 22 verbunden.

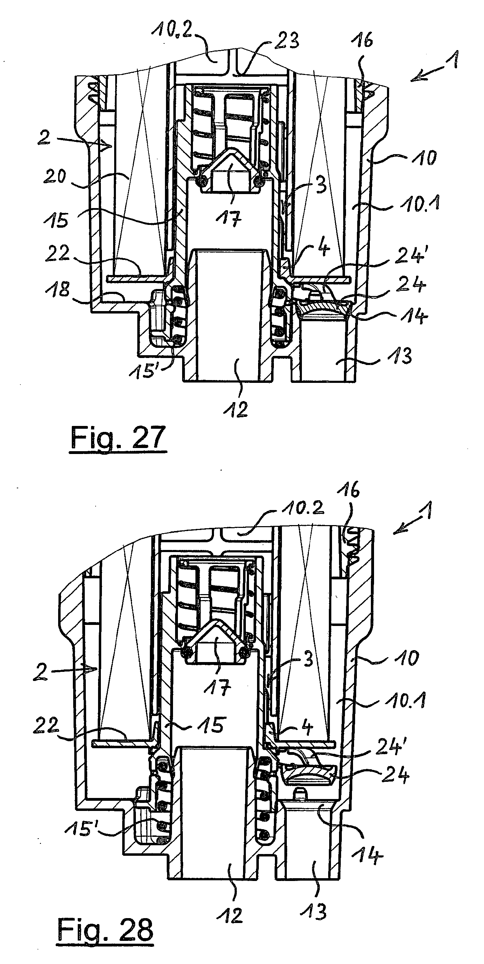

Die Figuren 27 und 28 zeigen wieder jeweils im Teil-Längsschnitt zwei Betriebszustände des Flüssigkeitsfilters 1 mit einer Stirnscheibe 22 gemäß Figur 26.

In Figur 27 ist der Ringfiltereinsatz 2 wieder vollständig in das Gehäuse 10 eingesetzt, wobei das Sperrelement 24 an dem Sitz 14 des Ablaufs 13 dichtend anliegt und den Ablauf 13 verschließt. Ein axialer Toleranzausgleich wird über die Federarme 24' ermöglicht. Das eingriffsgerechte Positionieren des Sperrelements 24 relativ zu dem Sitz 14 erfolgt über die schiefe Ebene 3 am Außenumfang des zentralen Rohrstutzens 15 und die Nase 4 am Innenumfang der unteren Stirnscheibe 22 des Ringfiltereinsatzes 2. Durch Zuführen von unter Druck stehender, zu filternder Flüssigkeit in den Rohbereich 10.1 strömt die Flüssigkeit durch den Filterstoffkörper 20 in den Reinbereich 10.2 und öffnet das auch hier vorgesehene Leerlaufsperrventil 17, so dass die gefilterte, saubere Flüssigkeit durch den Rücklauf 12 abströmen kann.

In Figur 28 ist der Ringfiltereinsatz 2 um einen gewissen Weg nach oben bewegt, wodurch das Sperrelement 24 von dem Sitz 14 am Ablauf 13 frei kommt und den Ablauf 13 öffnet. Das Leerlaufsperrventil 17 ist nun geschlossen, so dass sämtliche Flüssigkeit aus dem Filtergehäuse 10 durch den Ablauf 13 abfließt.

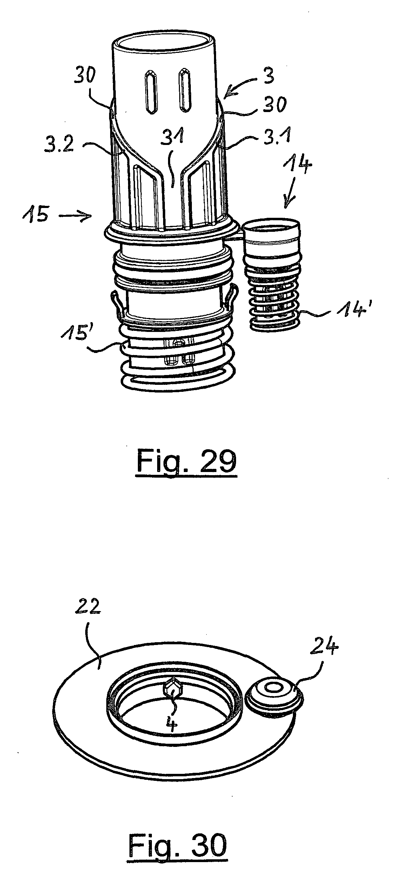

Die Figuren 29 bis 32 zeigen ein Beispiel der Erfindung, bei dem die schiefe Ebene an dem zentralen Rohrstutzen 15 und die Nase 4 am Innenumfang der unteren Stirnscheibe 22 des Ringfiltereinsatzes 2 vorgesehen sind. Weiterhin ist dieses Beispiel dadurch charakterisiert, dass der zentrale Rohrstutzen 15 mit dem Sitz 14 für den Ablauf 13 einstückig hergestellt oder verbunden ist.

In Figur 29 ist erkennbar, dass die schiefe Ebene 3 wieder durch die zwei Teileebenen 3.1 und 3.2 gebildet ist, die an ihrem Ende in die axiale Führung 31 übergehen. Die Oberseite der Teilebenen 3.1 und 3.2 bildet hier eine Gleitbahn 30 für die Nase 4. Wie die Figur 29 weiter zeigt, sind der zentrale Rohrstutzen 15 und das dem Sitz 14 bildende Bauteil mit parallelen Längsachsen ausgebildet, so dass die Einheit aus Rohrstutzen 15 und Sitz 14 in einem einzigen Montagevorgang achsparallel in das Filtergehäuse 10 eingebaut werden kann. Jeweils unten am Rohrstutzen 15 und an dem den Sitz 14 bildenden Bauteil ist eine Feder 15' bzw. 14' zum Ausgleich von Längentoleranzen vorgesehen.

Figur 30 zeigt eine untere Stirnscheibe 22 des Filtereinsatzes 2 zum Zusammenwirken mit dem Rohrstutzen 15 gemäß Figur 29. Die Stirnscheibe 22 gemäß Figur 30 besitzt am Innenumfang ihrer zentralen Durchbrechung die radial nach innen vorspringende Nase 4 als Positioniermittel, die mit der schiefen Ebene 3 am Rohrstutzen 15 gemäß Figur 29 zusammenwirkt. Auch hier sorgen die schiefe Ebene 3 und die Nase 4 dafür, dass ein Ringfiltereinsatz 2 mit der Stirnscheibe 23 und dem daran vorgesehenen Sperrelement 24 bei seinem Einbau selbsttätig in eine eingriffsgerechte Lage zum Sitz 14 gebracht wird.

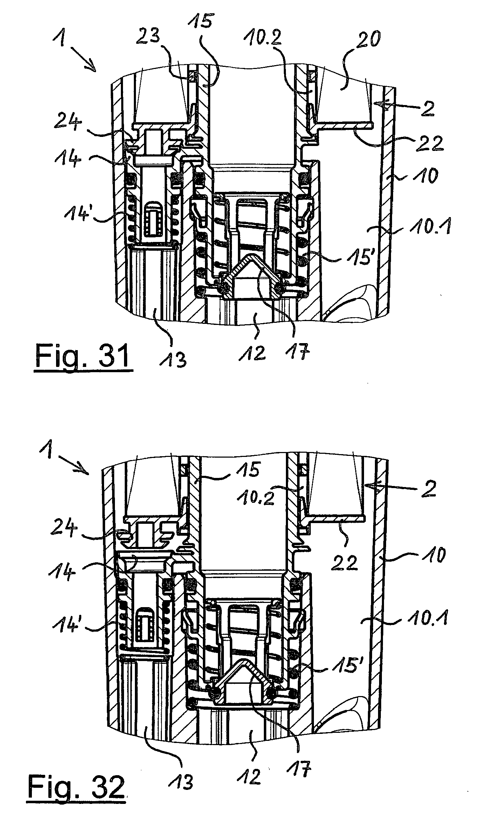

Die Figuren 31 und 32 zeigen wieder den Flüssigkeitsfilter 1 mit den in Figur 29 und 30 dargestellten Elementen, jeweils im Teil-Längsschnitt.

In Figur 31 ist der Filtereinsatz 2 in seiner tiefsten Stellung im Filtergehäuse 10 angeordnet. In dieser Stellung verschließt das Sperrelement 24 durch seine Anlage am Sitz 14 den Ablauf 13. Im zentralen Rohrstutzen 15 ist wieder ein Leerlaufsperrventil 17 vorgesehen, das öffnet, sobald unter Druck stehende Flüssigkeit durch den Flüssigkeitsfilter 1 gefördert wird.

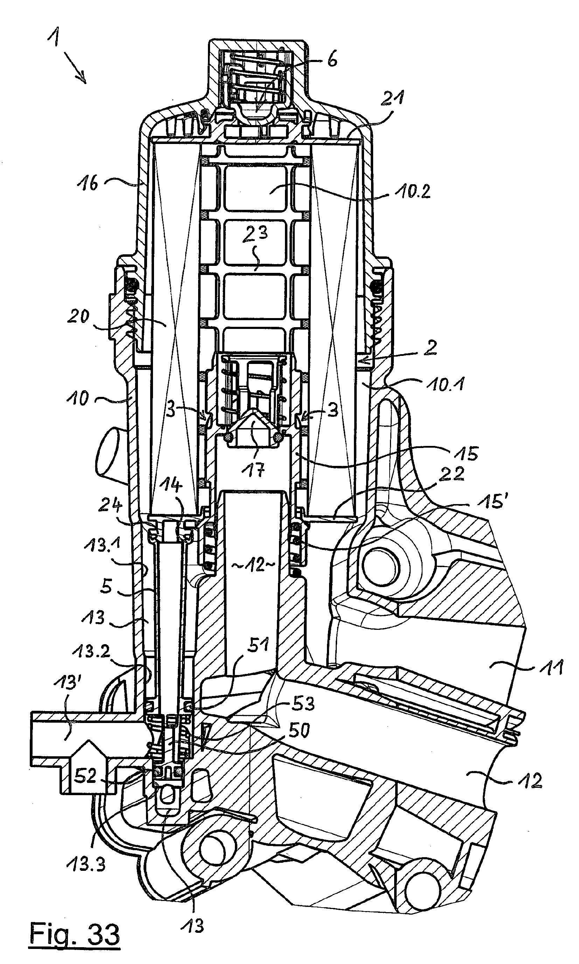

In Figur 33 ist der Filtereinsatz 2 um einen gewissen Weg nach oben innerhalb des Filtergehäuses 10 bewegt. Hierdurch kommt das Sperrelement 24 vom Sitz 14 frei und öffnet den Ablauf 13, während der Rücklauf 12 wegen des drucklosen Zustandes der Flüssigkeit im Gehäuse 10 durch das Leerlaufsperrventil 17 verschlossen ist. Somit strömt auch hier beim Herausnehmen des Filtereinsatzes 2 aus dem Filtergehäuse 10 sämtliche darin befindliche Flüssigkeit durch den Ablauf 13 ab.

Auch in den Schnittdarstellungen gemäß den Figuren 31 und 32 wird erkennbar, dass der zentrale Rohrstutzen 15 und der Sitz 14 zu einer Baueinheit verbunden sind und hier einstückig ausgeführt sind. Da der Rücklauf 12 und der Ablauf 13 parallel zueinander in Längsrichtung des Gehäuses 10 verlaufen, kann die Baueinheit aus Rohrstutzen 15 und Sitz 14 in einem Montageschritt in das Gehäuse 10 eingebaut werden.

Die Figuren 33 bis 36 zeigen ein Ausführungsbeispiel der Erfindung, wobei hier dem Flüssigkeitsfilter 1 noch eine weitere, nicht eigens dargestellte Komponente zugeordnet ist, beispielsweise ein Wärmetauscher, um die Flüssigkeit zu kühlen.

Der Flüssigkeitsfilter 1 besitzt auch hier ein Filtergehäuse 10 mit einem oberseitigen Schraubdeckel 16 und einem im Inneren des Filtergehäuses 10 angeordneten Ringfiltereinsatz 2.

Zur Zuführung von zu filternder Flüssigkeit dient der Zulauf 11, der von der weiteren Komponente kommt und der die zu reinigende Flüssigkeit auf die Rohseite 10.1 führt. Die Flüssigkeit durchströmt im Betrieb des Filters 1 den Filterstoffkörper 20 des Filtereinsatzes 2 und gelangt in den Reinbereich 10.2. Bei ausreichendem Druck der Flüssigkeit öffnet das Leerlaufsperrventil 17 und gibt den Rücklauf 12 frei.

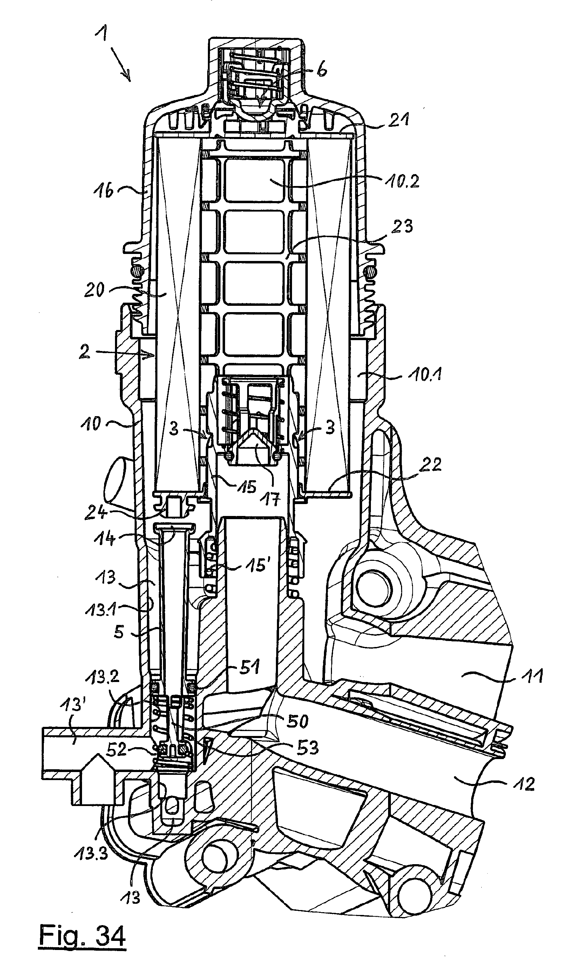

In Ablauf 13 ist auch hier ein Sitz 14 angeordnet, der mit einem Sperrelement 24 zusammenwirkt, welches hier einstückig mit der unteren Stirnscheibe 22 des Filtereinsatzes 2 ausgebildet ist. Zum positionsgerechten Zusammenführen von Sperrelement 24 und Sitz 14 dienen auch hier eine schiefe Ebene 3, die am Außenumfang eines zentralen Rohrstutzens 15 ausgebildet ist, und eine damit zusammenwirkende Nase 4, die in Figur 33 und 34 nicht sichtbar am Innenumfang des Ringfiltereinsatzes 2 angeordnet ist.

Der Sitz 14 ist hier am oberen Ende eines Rohrstücks 5 ausgebildet, welches in Axialrichtung verschieblich im Ablauf 13 geführt ist. Dabei besitzt der Ablauf 13 hier drei Ablaufabschnitte 13.1, 13.2 und 13.3, die unterschiedliche, abnehmende Durchmesser aufweisen. Nach unten hin ist das Rohrstück 5 durch einen Fortsatz 50 verlängert. Am unteren Ende des Rohrstücks 5 ist eine erste, obere Radialdichtung 51 und am unteren Ende des Fortsatzes 50 eine zweite, untere Radialdichtung 52 angebracht. Durch eine am Filtergehäuse 10 abgestützte Feder 53 ist das Rohrstück 5 mit einer nach oben weisenden Kraft vorbelastet.

In dem in Figur 33 gezeigten normalen Betriebszustand des Filters 1 ist der Deckel 16 dicht mit dem Filtergehäuse 10 verbunden und der Filtereinsatz 2 nimmt seine tiefste Position im Filtergehäuse 10 ein. In dieser Stellung drückt der Deckel 16 über den Filtereinsatz 2 und dessen Sperrelement 24 das Rohrstück 5 gegen die Kraft der Feder 53 nach unten. In dieser Lage des Rohrstücks 5 liegt die obere Radialdichtung 51 dichtend in Ablaufabschnitt 13.2 und die untere Radialdichtung 52 dichtend im untersten Ablaufabschnitt 13.3. Somit ist der Ablauf 13 dicht verschlossen. Wenn zu filternde Flüssigkeit unter Druck durch den Zulauf 11 zugeführt wird, durchströmt die Flüssigkeit den Filterstoffkörper 20 und öffnet das Leerlaufsperrventil 17 und strömt durch den Rücklauf 12 ab. Wenn keine neue Flüssigkeit durch den Zulauf 11 zugefördert wird, schließt das Leerlaufsperrventil 17 und verhindert ein Leerlaufen des Filtergehäuses 10.

Gemäß Figur 33 und 34 ist mit dem mittleren Ablaufabschnitt 13.2 nach links weisend ein Ablaufzweigkanal 13' verbunden, der bei der Stellung des Rohrstücks 5 gemäß Figur 33 sowohl gegen den ersten Ablaufabschnitt 13.1 als auch gegen den dritten Ablaufabschnitt 13.3 dicht abgesperrt ist. Durch den Ablaufzweigkanal 13' strömt in Normalbetrieb zu kühlende Flüssigkeit von unten her durch den dort dargestellten Anschluss zu der hier ebenfalls nicht dargestellten weiteren Komponente, wie Wärmetauscher, und gelangt nach dessen Durchströmung über den Zulauf 11 in den Flüssigkeitsfilter 1.

In dem Zustand gemäß Figur 34 ist der Schraubdeckel 16 gelöst und mit ihm zusammen der mit dem Schraubdeckel 16 verrastete Ringfiltereinsatz 2 angehoben. Hierdurch kommt das Sperrelement 24 vom Sitz 14 am oberen Ende des Rohrstücks 5 frei. Gleichzeitig ist das Rohrstück 5 zusammen mit seinem Fortsatz 50 durch die Kraft der Feder 53 so weit nach oben bewegt, dass nun die untere Radialdichtung 52 den unteren Ablaufabschnitt 13.3 verlassen hat. Auf diese Weise wird zum einen das Filtergehäuse 10 über den Ablauf 13 von Flüssigkeit entleert und zum anderen ein Leerlaufen der weiteren Komponente über den Ablaufzweigkanal 13' in den Ablauf 13 freigegeben. Es wird also bei einem Herausnehmen des Ringfiltereinsatzes 2 aus den Gehäuse 10 hier nicht nur das Filtergehäuse 10 von Flüssigkeit entleert, sondern gleichzeitig auch die Flüssigkeit aus der weiteren Komponente, wie Wärmetauscher, abgelassen.

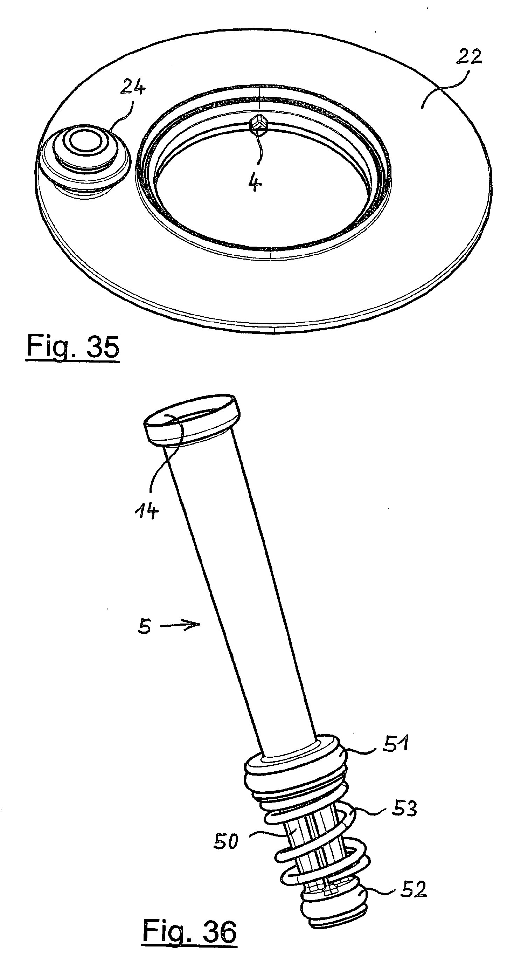

Figur 35 zeigt die untere Stirnscheibe 22 des Filtereinsatzes 2 des Flüssigkeitsfilters 1 gemäß den Figuren 33 und 34 als Einzelteil in einer perspektivischen Unteransicht. In der zentralen Durchbrechung der Stirnscheibe 22 liegt an deren Innenumfang die radial nach innen vorspringende Nase 4, die mit der am zentralen Rohrstutzen 15 an dessen Außenumfang vorgesehenen schiefen Ebene 3 beim Einbauen des Ringfiltereinsatzes 2 in das Filtergehäuse 10 zusammenwirkt. Links in Figur 35 ist an der dem Betrachter zugewandten Unterseite der Stirnscheibe 23 das einstückig angeformte Sperrelement 24 sichtbar.

Figur 36 zeigt das Rohrstück 5 aus dem Flüssigkeitsfilter 1 gemäß den Figuren 33 und 34 als Einzelteil in einer Ansicht. Ganz oben ist an dem Rohrstück 5 der Sitz 14 erkennbar, der im eingebauten Zustand des Ringfiltereinsatzes 2 mit dem Sperrelement 24 dichtend zusammenwirkt. Am unteren Ende setzt sich das Rohrstück 5 in dem Fortsatz 50 fort. Am unteren Ende des Rohrstücks 5 ist die erste, obere Radialdichtung 51 angeordnet. Am unteren Ende des Fortsatzes 50 ist die zweite, untere Radialdichtring 52 angebracht und um den Fortsatz 50 herum verläuft die Schraubenfeder 53, deren oberes Ende unter der oberen Radialdichtung 51 am Rohrstück 5 abgestützt ist.

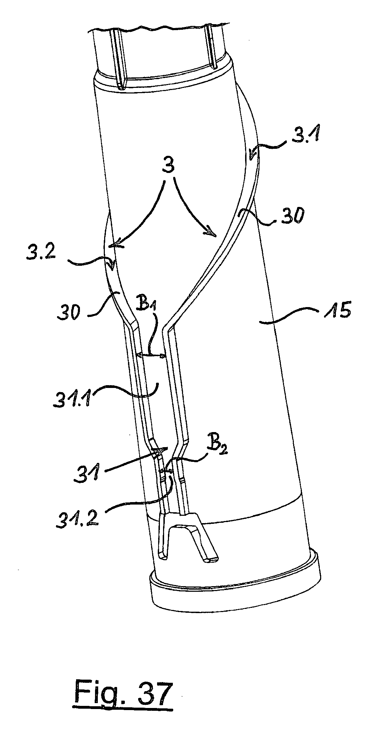

Figur 37 schließlich zeigt nur den Rohrstutzen 15 als Einzelteil in einer geänderten Ausführung, in Ansicht auf seinen unteren Teil. Die schiefe Ebene 3 besteht auch bei dem Beispiel nach Figur 37 aus den zwei aufeinander zu laufenden Teilebenen 3.1 und 3.2, die an ihrem unteren Ende in eine axiale Führung 31 übergehen. Die Oberseite der Teilebenen 3.1 und 3.2 bildet jeweils eine Gleitbahn 30 für die Nase 4, die am Innenumfang des hier nicht dargestellten Filtereinsatzes 2 angeformt ist. Wenn bei einem Einbauen des Filtereinsatzes 2 dieser eine für den Eingriff des Sperrelementes 24 in den zugehörigen Sitz 14 nicht passende Verdrehstellung aufweist, trifft die Nase 4 zunächst auf die schiefe Ebene 3, genauer auf eine ihrer Teilebenen 3.1 oder 3.2. Bei weiterer Bewegung nach unten wird der Filtereinsatz 2 durch die auf der schiefen Ebene 3 bzw. einer ihrer Gleitbahnen 30 gleitende Nase 4 zwangsweise in die richtige Verdrehstellung gebracht.

Die sich an die schiefe Ebene 3 anschließende axiale Führung 31 hat hier einen ersten, breiteren Führungsabschnitt 31.1, dessen Breite B₁ mindestens um 50 % größer ist als die Breite der zugehörigen Nase 4. Weiter nach unten schließt sich ein zweiter, schmalerer Führungsabschnitt 31.2 an, dessen Breite B₂ der Breite B_{N} (vergleiche Figur 26) der zugehörigen Nase 4 zuzüglich eines für ein klemmfreies Verschieben der Nase 4 im Führungsabschnitt 31.2 nötigen Bewegungsspiels entspricht.

Ganz unten kann sich die axiale Führung 31 noch wieder geringfügig verbreitern, um Fertigungstoleranzen auszugleichen und ein in Umfangsrichtung zwangfreies Eintreten des Sperrelementes 24 in den zugehörigen Sitz 14 zu erlauben.

### Bezugszeichenliste:

| Zeichen | Bezeichnung |
|---|---|
| 1 | Flüssigkeitsfilter |
| 10 | Filtergehäuse |
| 10.1 | Rohseite |
| 10.2 | Reinseite |
| 11 | Zulauf |
| 12 | Rücklauf |
| 13 | Ablauf |
| 13.1-13.3 | Ablaufabschnitte |
| 13' | Ablaufzweigkanal |
| 14 | Sitz |
| 14' | Feder an 14 |
| 15 | Rohrstutzen |
| 15' | Feder an 15 |
| 16 | Deckel |
| 17 | Leerlaufsperrventil |
| 18 | Boden von 10 |
| | |
| 2 | Ringfiltereinsatz |
| 20 | Filterstoffkörper |
| 21 | obere Stirnscheibe |
| 22 | untere Stirnscheibe |
| 23 | Stützdom in 2 |
| 24 | Sperrelement |
| 24' | Federarme |
| 25 | Anrastträger |
| 3 | schiefe Ebene |
| 3.1,3.2 | Teilebenen |
| 30 | Gleitbahn |
| 31 | axiale Führung |
| 31.1 | erster Führungsabschnitt |
| 31.2 | zweiter Führungsabschnitt |
| | |
| 4 | Nase |
| 40 | Gleitflächen |
| | |
| 5 | Rohrstück |
| 50 | Fortsatz |
| 51 | obere Radialdichtung |
| 52 | untere Radialdichtung |
| 53 | Feder |
| | |
| 6 | Filterumgehungsventil |
| | |
| B₁ | Breite von 31.1 |
| B₂ | Breite von 31.2 |
| B_{N} | Breite von 4 |

## Patentansprüche

1. Flüssigkeitsfilter (1), insbesondere Ölfilter einer Brennkraftmaschine, mit einem Filtergehäuse (10), mit einem darin auswechselbar angeordneten Ringfiltereinsatz (2) und mit einem das Filtergehäuse (10) im Betrieb verschließenden, abnehmbaren Deckel (16), wobei das Filtergehäuse (10) zumindest einen in eine Rohseite (11) des Filtergehäuses (10) mündenden Zulauf (11) für zu filternde Rohflüssigkeit und einen von einer Reinseite (12) des Filtergehäuses (10) ausgehenden Rücklauf (12) für gefilterte Reinflüssigkeit aufweist, wobei in einem Boden (18) des Filtergehäuses (10) eine exzentrische Öffnung angeordnet ist, wobei der Filtereinsatz (2) aus einem stirnseitig von Stirnscheiben (21, 22) eingefassten hohlzylindrischen Filterstoffkörper (20) besteht und die Rohseite (11) und die Reinseite (12) voneinander trennt, wobei an der dem Boden (18) zugewandten Stirnscheibe (22) ein exzentrisches Sperrelement (24) für die exzentrische Öffnung angeordnet ist, wobei am Ringfiltereinsatz (2) und am Filtergehäuse (10) zusammenwirkende Positioniermittel vorgesehen sind, die beim Einsetzen des Ringfiltereinsatzes (2) in das Filtergehäuse (10) das Sperrelement (24) in Eingriff mit der exzentrischen Öffnung führen, wobei das erste Positioniermittel eine schiefe Ebene (3) ist, wobei das zweite Positioniermittel eine radial vorragende Nase (4) ist, die in Gegenüberstellung zur schiefen Ebene (3) angeordnet ist, und wobei unter Verdrehung des Ringfiltereinsatzes (2) zum Filtergehäuse (10) die schiefe Ebene (3) und die Nase (4) relativ zueinander aneinander entlang gleitend bewegbar sind und das Sperrelement (24) in Eingriff mit der exzentrischen Öffnung führen,
**dadurch gekennzeichnet,**
**dass** a) die schiefe Ebene (3) auf dem Außenumfang eines im Inneren des Ringfiltereinsatzes (2) liegenden Filtergehäuseteils (15) und die radial vorragende Nase (4) auf dem Innenumfang des Ringfiltereinsatzes (2) ausgebildet oder angeordnet sind oder
**dass** b) die schiefe Ebene (3) auf dem Innenumfang des Ringfiltereinsatzes (2) und die radial vorragende Nase (4) auf dem Außenumfang des im Inneren des Ringfiltereinsatzes (2) liegenden Filtergehäuseteils (15) ausgebildet oder angeordnet sind
und
**dass** die exzentrische Öffnung ein Ablauf (13) zum Entleeren des Filtergehäuses (10) bei Entnahme des Filtereinsatzes (2) ist.

2. Flüssigkeitsfilter nach Anspruch 1, **dadurch gekennzeichnet, dass** die schiefe Ebene (3) durch zwei gegensinnig aufeinander zu laufende, sich jeweils über den halben Innenumfang des Ringfiltereinsatzes (2) oder den halben Außenumfang des im inneren des Ringfiltereinsatzes (2) liegenden Filtergehäuseteils (15) erstreckende Teilebenen (3.1, 3.2) gebildet ist.

3. Flüssigkeitsfilter nach Anspruch 1 oder 2, **dadurch gekennzeichnet, dass** die schiefe Ebene (3) eine Selbsthemmung ausschließende Steigung aufweist.

4. Flüssigkeitsfilter nach Anspruch 1,2 oder 3, **dadurch gekennzeichnet, dass** sich an das untere Ende der schiefen Ebene (3) eine in Axialrichtung laufende Führung (31) für die Nase (4) anschließt.

5. Flüssigkeitsfilter nach Anspruch 4, **dadurch gekennzeichnet, dass** die in Axialrichtung laufende Führung (31) für die Nase (4) im Anschluss an die schiefe Ebene (3) zunächst einen ersten Führungsabschnitt (31.1) mit einer Breite (B₁) aufweist, die um wenigstens 50 % größer als die Breite (B_{N}) der Nase (4) ist, und dass der erste Führungsabschnitt (31.1) in einen anschließenden zweiten Führungsabschnitt (31.2) übergeht mit einer Breite (B₂), die der Breite (B_{N}) der Nase (4) zuzüglich eines für ein klemmfreies Verschieben der Nase (4) in dem zweiten Führungsabschnitt (31.2) ausreichenden Bewegungsspiels entspricht.

6. Flüssigkeitsfilter nach einem der Ansprüche 1 bis 5, **dadurch gekennzeichnet, dass** die schiefe Ebene (3) oder deren Teilebenen (3.1, 3.2) jeweils durch eine radial vorstehenden, ober- oder unterseitig eine Gleitbahn (30) für die Nase (4) bildende Rippe oder Stufe gebildet ist/sind.

7. Flüssigkeitsfilter nach einem der Ansprüche 1 bis 6, **dadurch gekennzeichnet, dass** die schiefe Ebene (3) einstückig mit dem Filtergehäuse (10) oder mit dem Ringfiltereinsatz (2) ausgeführt ist.

8. Flüssigkeitsfilter nach einem der Ansprüche 1 bis 6, **dadurch gekennzeichnet, dass** die schiefe Ebene (3) als separates Teil gefertigt und mit dem Filtergehäuse (10) oder mit dem Ringfiltereinsatz (2) verbunden ist.

9. Flüssigkeitsfilter nach einem der Ansprüche 1 bis 8, **dadurch gekennzeichnet, dass** die Nase (4) einstückig mit dem Filtergehäuse (10) oder mit dem Ringfiltereinsatz (2) ausgeführt ist.

10. Flüssigkeitsfilter nach einem der Ansprüche 1 bis 9, **dadurch gekennzeichnet, dass** das Sperrelement (24) ein starr an der unteren Stirnscheibe (22) angeordnetes radial oder axial dichtendes Ventilelement oder ein starr an der unteren Stirnscheibe (22) angeordneter radial dichtender Stopfen ist.

11. Flüssigkeitsfilter nach einem der Ansprüche 1 bis 9, **dadurch gekennzeichnet, dass** das Sperrelement (24) ein federnd an der unteren Stirnscheibe (22) angeordnetes axial dichtendes Ventilelement (24) ist.

12. Flüssigkeitsfilter nach einem der Ansprüche 1 bis 11, **dadurch gekennzeichnet, dass** der Ablauf (13) mit einem filtergehäuseseitig eingearbeiteten oder als separates Teil eingesetzten, zu dem Sperrelement (24) passenden Sitz (14) ausgeführt ist.

13. Flüssigkeitsfilter nach einem der Ansprüche 1 bis 12, **dadurch gekennzeichnet, dass** der im inneren des Ringfiltereinsatzes (2) liegende Filtergehäuseteil (15) ein den Rücklauf (12) enthaltender Rohrstutzen (15) ist, der mit dem übrigen Filtergehäuse (10) starr verbunden oder einstückig ist oder der in Axialrichtung beweglich im übrigen Filtergehäuse (10) geführt und mit einer in Richtung zum Deckel (16) weisenden Federkraft vorbelastet ist.

14. Flüssigkeitsfilter nach Anspruch 13, **dadurch gekennzeichnet, dass** der Rohrstutzen (15) mit einem zum Sperrelement (24) passenden Sitz (14) verbunden oder einstückig ausgeführt ist, welcher achsparallel zum Rohrstutzen (15) in den Ablauf (13) eingesetzt ist.

15. Flüssigkeitsfilter nach einem der Ansprüche 1 bis 13, **dadurch gekennzeichnet, dass** der Ablauf (13) in Ablaufrichtung gesehen drei Ablaufabschnitte (13.1, 13.2, 13.3) mit jeweils kleinerem Durchmesser aufweist, wobei in den Ablaufabschnitt (13.3) mit dem kleinsten Durchmesser ein Ablaufzweigkanal (13') einer dem Flüssigkeitsfilter (1) zugeordneten, die selbe Flüssigkeit führenden Komponente einmündet, dass im Ablauf (13) ein Rohrstück (5) axial verschieblich angeordnet und mit einer zum Deckel (16) weisenden Federkraft vorbelastet ist, wobei das Rohrstück (5) an seinem oberen Ende einen zum Sperrelement (24) passenden Sitz (14) und an seinem unteren Ende eine erste, obere Radialdichtung (51) trägt, dass das Rohrstück (5) einen sich von seinem unteren Ende axial nach unten erstreckenden Fortsatz (50) aufweist, der an seinem unteren Ende eine zweite, untere Radialdichtung (52) trägt, wobei die Radialdichtungen (51, 52) voneinander axial beabstandet mit den Ablaufabschnitten (13.2 und 13.3) mit den zwei kleineren Durchmessern dichtend zusammenwirken und wobei bei Bewegung des Rohrstücks (5) aus einer tiefsten Grundstellung nach oben bei Abnehmen des Deckels (16) zuerst die untere Radialdichtung (52) aus dem Ablaufabschnitt (13.3) mit dem kleinsten Durchmesser in den Ablaufabschnitt (13.2) mit dem mittleren Durchmesser überführt wird, während die obere Radialdichtung (51) in dem Ablaufabschnitt (13.2) mit dem mittleren Durchmesser verbleibt.

16. Ringfiltereinsatz (2) für einen Flüssigkeitsfilter (1), insbesondere für einen Ölfilter einer Brennkraftmaschine, wobei der Ringfiltereinsatz (2) aus einem stirnseitig von Stirnscheiben (21, 22) eingefassten hohlzylindrischen Filterstoffkörper (20) besteht und in einem Filtergehäuse (10) auswechselbar angeordnet werden kann, wobei an der im Einbauzustand einem Boden (18) des Filtergehäuses (10) zugewandten Stirnscheibe (22) ein exzentrisches Sperrelement (24) für eine exzentrische Öffnung im Boden (18) des Filtergehäuses (10) angeordnet ist, wobei am Ringfiltereinsatz (2) Positioniermittel vorgesehen sind, die beim Einsetzen des Ringfiltereinsatzes (2) in das Filtergehäuse (10) mit am Filtergehäuse (10) vorgesehenen Positioniermitteln zusammenwirken und das Sperrelement (24) in Eingriff mit der exzentrischen Öffnung führen, wobei das erste Positioniermittel eine schiefe Ebene (3) ist und wobei das zweite Positioniermittel eine radial vorragende Nase (4) ist, die in Gegenüberstellung zur schiefen Ebene (3) angeordnet ist, und wobei unter Verdrehung des Ringfiltereinsatzes (2) zum Filtergehäuse (10) die schiefe Ebene (3) und die Nase (4) relativ zueinander aneinander entlang gleitend bewegbar sind und dadurch das Sperrelement (24) in Eingriff mit der exzentrischen Öffnung führbar ist,
**dadurch gekennzeichnet ,**
**dass** a) die radial vorragende Nase (4) auf dem Innenumfang des Ringfiltereinsatzes (2) ausgebildet oder angeordnet ist oder
**dass** b) die schiefe Ebene (3) auf dem Innenumfang des Ringfiltereinsatzes (2) ausgebildet oder angeordnet ist.

17. Ringfiltereinsatz nach Anspruch 16, **dadurch gekennzeichnet, dass** die schiefe Ebene (3) durch zwei gegensinnig aufeinander zu laufende, sich jeweils über den halben Innenumfang des Ringfiltereinsatzes (2) erstreckende Teilebenen (3.1, 3.2) gebildet ist.

18. Ringfiltereinsatz nach Anspruch 16 oder 17, **dadurch gekennzeichnet, dass** sich an das untere Ende der schiefen Ebene (3) eine in Axialrichtung laufende Führung (31) für die Nase (4) anschließt.

19. Ringfiltereinsatz nach Anspruch 18, **dadurch gekennzeichnet, dass** die in Axialrichtung laufende Führung (31) für die Nase (4) im Anschluss an die schiefe Ebene (3) zunächst einen ersten Führungsabschnitt (31.1) mit einer Breite (B₁) aufweist, die um wenigstens 50 % größer als die Breite (B_{N}) der Nase (4) ist, und dass der erste Führungsabschnitt (31.1) in einen anschließenden zweiten Führungsabschnitt (31.2) übergeht mit einer Breite (B₂), die der Breite (B_{N}) der Nase (4) zuzüglich eines für ein klemmfreies Verschieben der Nase (4) in dem zweiten Führungsabschnitt (31.2) ausreichenden Bewegungsspiels entspricht.

20. Ringfiltereinsatz nach einem der Ansprüche 16 bis 19, **dadurch gekennzeichnet, dass** die schiefe Ebene (3) oder deren Teilebenen (3.1, 3.2) jeweils durch eine radial vorstehenden, ober- oder unterseitig eine Gleitbahn (30) für die Nase (4) bildende Rippe oder Stufe gebildet ist/sind.

21. Ringfiltereinsatz nach einem der Ansprüche 16 bis 20, **dadurch gekennzeichnet, dass** die schiefe Ebene (3) einstückig mit dem Ringfiltereinsatz (2) ausgeführt ist.

22. Ringfiltereinsatz nach einem der Ansprüche 16 bis 20, **dadurch gekennzeichnet, dass** die schiefe Ebene (3) als separates Teil gefertigt und mit dem Ringfiltereinsatz (2) verbunden ist.

23. Ringfiltereinsatz nach Anspruch 21 oder 22, **dadurch gekennzeichnet, dass** im Inneren des Ringfiltereinsatzes (2) ein Stützdom (23) angeordnet ist, an welchem die schiefe Ebene (3) angeordnet ist.

24. Ringfiltereinsatz nach einem der Ansprüche 16 bis 20, **dadurch gekennzeichnet, dass** die Nase (4) einstückig mit dem Ringfiltereinsatz (2), insbesondere mit dessen unterer Stirnscheibe (22), ausgeführt ist.

25. Ringfiltereinsatz nach einem der Ansprüche 16 bis 24, **dadurch gekennzeichnet, dass** das Sperrelement (24) ein starr an der unteren Stirnscheibe (22) angeordnetes radial oder axial dichtendes Ventilelement oder ein starr an der unteren Stirnscheibe (22) angeordneter radial dichtender Stopfen ist.

26. Ringfiltereinsatz nach einem der Ansprüche 16 bis 24, **dadurch gekennzeichnet, dass** das Sperrelement (24) ein federnd an der unteren Stirnscheibe (22) angeordnetes axial dichtendes Ventilelement (24) ist.

27. Ringfiltereinsatz nach Anspruch 26, **dadurch gekennzeichnet, dass** mit der Stirnscheibe (22) zwei Federarme (24') einstückig ausgebildet sind, die das Sperrelement (24) in Axialrichtung federnd tragen.

28. Ringfiltereinsatz nach Anspruch 27, **dadurch gekennzeichnet, dass** das mit den Federarmen (24') gehaltene Sperrelement (24) über einen Anrastträger (25) mit der übrigen Stirnscheibe (22) verbunden ist.

29. Ringfiltereinsatz nach einem der Ansprüche 16 bis 28, **dadurch gekennzeichnet, dass** das Sperrelement (24) zweiteilig ausgebildet ist, wobei die beiden Teile des Sperrelements (24) einen Ausgleich von radialen Maßtoleranzen und Winkelfehlern erlaubend miteinander verrastet sind.

## Claims

1. A liquid filter (1), in particular an oil filter for an internal combustion engine, comprising a filter housing (10), comprising a ring filter insert (2), which is exchangeably arranged therein, and comprising a removable cover (16), which closes the filter housing (10) during operation, wherein the filter housing (10) encompasses at least one intake line (11), which leads into a raw side (11) of the filter housing (10), for raw liquid, which is to be filtered, and a return line (12), which starts at a clean side (12) of the filter housing (10), for filtered clean liquid, wherein an eccentric opening is arranged in a bottom (18) of the filter housing (10), wherein the filter insert (2) consists of a hollow-cylindrical filter cloth body (10), which is bordered frontally by front plates (21, 22), and which separates the raw side (11) and the clean side (12) from one another, wherein an eccentric locking element (24) for the eccentric opening is arranged on the front plate (22), which faces the bottom (18), wherein provision is made for positioning means, which interact on the ring filter insert (2) and on the filter housing (10) and which guide the locking element (24) to be engaged with the eccentric opening in response to the insertion of the ring filter insert (2) into the filter housing (10), wherein the first positioning means is an inclined plane (3), wherein the second positioning means is a radially protruding nose (4), which is arranged across from the inclined plane (3), and wherein the inclined plane (3) and the nose (4) can be moved relative to one another so as to glide along one another by rotating the ring filter insert (2) to the filter housing (10), and guide the locking element (24) so as to be engaged with the eccentric opening,
**characterized in that**
a) the inclined plane (3) is embodied or arranged on the outer circumference of a filter housing part (15), which is located in the interior of the ring filter insert (2), and the radially protruding nose (4) is embodied or arranged on the inner circumference of the ring filter insert (2) or
b) the inclined plane (3) is embodied or arranged on the inner circumference of the ring filter insert (2) and the radially protruding nose (4) is embodied or arranged on the outer circumference of the filter housing part (15), which is located in the interior of the ring filter insert (2)
and
the eccentric opening is an outlet (13) for emptying the filter housing (10) in response to the removal of the filter insert (2).

2. The liquid filter according to claim 1, **characterized in that** the inclined plane (3) is formed by two partial planes (3.1, 3.2), which run towards one another in opposite direction and which in each case extend across half of the inner circumference of the ring filter insert (2) or half of the outer circumference of the filter housing part (15), which is located in the interior of the ring filter insert (2).

3. The liquid filter according to claim 1 or 2, **characterized in that** the inclined plane (3) encompasses an incline, which eliminates a self-locking.

4. The liquid filter according to claim 1, 2 or 3, **characterized in that** a guide (31) for the nose (4), which runs in axial direction, connects to the lower end of the inclined plane (3).

5. The liquid filter according to claim 4, **characterized in that**, following the inclined plane (3), the guide (31) for the nose (4), which runs in axial direction, initially encompasses a first guide section (31.1), comprising a width (B₁), which is at least 50% larger than the width (B_{N}) of the nose (4), and that the first guide section (31.1) merges into a following second guide section (31.2), comprising a width (B₂), which corresponds to the width (B_{N}) of the nose (4) plus a play of movement, which is sufficient for a displacement of the nose (4) in the second guide section (31.2) without jamming.

6. The liquid filter according to any one of claims 1 to 5, **characterized in that** the inclined plane (3) or the partial planes (3.1, 3.2) thereof, is/are in each case formed by a radially protruding rib or step, which forms a sliding guide (30) for the nose (4) on the upper or lower side.

7. The liquid filter according to any one of claims 1 to 6, **characterized in that** the inclined plane (3) is embodied in one piece with the filter housing (10) or with the ring filter insert (2).

8. The liquid filter according to any one of claims 1 to 6, **characterized in that** the inclined plane (3) is produced as a separate part and is connected to the filter housing (10) or to the ring filter insert (2).

9. The liquid filter according to any one of claims 1 to 8, **characterized in that** the nose (4) is embodied in one piece with the filter housing (10) or with the ring filter insert (2).

10. The liquid filter according to any one of claims 1 to 9, **characterized in that** the locking element (24) is a valve element, which is rigidly arranged on the lower front plate (22) and which seals radially or axially, or a plug, which is rigidly arranged on the lower front plate (22) and seals radially.

11. The liquid filter according to any one of claims 1 to 9, **characterized in that** the locking element (24) is a valve element (24), which is resiliently arranged on the lower front plate (22) and seals axially.

12. The liquid filter according to any one of claims 1 to 11, **characterized in that** the outlet (13) is embodied with a lug (14), which is incorporated on the filter housing side or which is inserted as a separate part and which matches the locking element (24).

13. The liquid filter according to any one of claims 1 to 12, **characterized in that** the filter housing part (15), which is located in the interior of the ring filter insert (2), is a pipe connection (15), which includes the return line (12) and which is rigidly connected to the remaining filter housing (10) or is one piece or is guided in the remaining filter housing (10) so as to be movable in axial direction and is prestressed with a spring force oriented in the direction of the cover (16).

14. The liquid filter according to claim 13, **characterized in that** the pipe connection (15) is connected to a lug (14), which matches the locking element (24), or is embodied in one piece, said lug being inserted into the outlet (13) so as to be axially parallel to the pipe connection (15).

15. The liquid filter according to any one of claims 1 to 13, **characterized in that**, viewed in outlet direction, the outlet (13) encompasses three outlet sections (13.1, 13.2, 13.3), in each case comprising a smaller diameter, wherein an outlet branch channel (13') of a component, which is assigned to the liquid filter (1) and which guides the same liquid, leads into the outlet section (13.3) comprising the smallest diameter, **in that** a pipe section (5) is arranged in the outlet (13) so as to be axially displaceable and is prestressed with a spring force oriented towards the cover (16), wherein, on its upper end, the pipe section (5) supports a lug (14), which matches the locking element (24) and, on its lower end, supports a first upper radial seal (51), **in that** the pipe section (5) encompasses an appendage (50), which extends axially downwards from its lower end and which, on its lower end, supports a second lower radial seal (52), wherein the radial seals (51, 52), being axially spaced apart from one another, interact with the outlet sections (13.2 and 13.3) comprising the two smaller diameters so as to form a seal, and wherein the lower radial seal (52) is first transferred from the outlet section (13.3) comprising the smallest diameter into the outlet section (13.2) comprising the average diameter in response to moving the pipe section (5) upwards from a deepest basic position when the cover (16) is removed, while the upper radial seal (51) remains in the outlet section (13.2) comprising the average diameter.

16. A ring filter insert (2) for a liquid filter (1), in particular for an oil filter for an internal combustion engine, wherein the ring filter insert (2) consists of a hollow-cylindrical filter cloth body (20), which is bordered frontally by front plates (21, 22), and can be replaceably arranged in a filter housing (10), wherein an eccentric locking element (24) for an eccentric opening in the bottom (18) of the filter housing (10) is arranged on the front plate (22), which faces a bottom (18) of the filter housing (10) in the installed state, wherein provision is made on the ring filter insert (2) for positioning means, which interact with positioning means provided on the filter housing (10) and which guide the locking element (24) so as to be engaged with the eccentric opening in response to the insertion of the ring filter insert (2) into the filter housing (10), wherein the first positioning means is an inclined plane (3) and wherein the second positioning means is a radially protruding nose (4), which is arranged across from the inclined plane (3), and wherein the inclined plane (3) and the nose (4) can be moved relative to one another so as to glide along one another by rotating the ring filter insert (2) to the filter housing (10), and the locking element (24) can thereby be guided so as to be engaged with the eccentric opening,
**characterized in that**
a) the radially protruding nose (4) is embodied or arranged on the inner circumference of the ring filter insert (2) or
b) the inclined plane (3) is embodied or arranged on the inner circumference of the ring filter insert (2).

17. The ring filter insert according to claim 16, **characterized in that** the inclined plane (3) is formed by two partial planes (3.1, 3.2), which run towards one another in opposite direction and which in each case extend across half of the inner circumference of the ring filter insert (2).

18. The ring filter insert according to claim 16 or 17, **characterized in that** a guide (31) for the nose (4), which runs in axial direction, connects to the lower end of the inclined plane (3).

19. The ring filter insert according to claim 18, **characterized in that**, following the inclined plane (3), the guide (31) for the nose (4), which runs in axial direction, initially encompasses a first guide section (31.1), comprising a width (B₁), which is at least 50% larger than the width (B_{N}) of the nose (4), and that the first guide section (31.1) merges into a following second guide section (31.2), comprising a width (B₂), which corresponds to the width (B_{N}) of the nose (4) plus a play of movement, which is sufficient for a displacement of the nose (4) in the second guide section (31.2) without jamming.

20. The ring filter insert according to any one of claims 16 to 19, **characterized in that** the inclined plane (3) or the partial planes (3.1, 3.2) thereof, is/are in each case formed by a radially protruding rib or step, which forms a sliding guide (30) for the nose (4) on the upper or lower side.

21. The ring filter insert according to any one of claims 16 to 20, **characterized in that** the inclined plane (3) is embodied in one piece with the ring filter insert (2).

22. The ring filter insert according to any one of claims 16 to 20, **characterized in that** the inclined plane (3) is produced as a separate part and is connected to the ring filter insert (2).

23. The ring filter insert according to claim 21 or 22, **characterized in that** a support dome (23), on which the inclined plane (3) is arranged, is arranged in the interior of the ring filter insert (2).

24. The ring filter insert according to any one of claims 16 to 20, **characterized in that** the nose (4) is embodied in one piece with the ring filter insert (2), in particular with the lower front plate (22) thereof.

25. The ring filter insert according to any one of claims 16 to 24, **characterized in that** the locking element (24) is a valve element, which is rigidly arranged on the lower front plate (22) and which seals radially or axially, or a plug, which is rigidly arranged on the lower front plate (22) and seals radially.

26. The ring filter insert according to any one of claims 16 to 24, **characterized in that** the locking element (24) is a valve element (24), which is resiliently arranged on the lower front plate (22) and seals axially.

27. The ring filter insert according to claim 26, **characterized in that** two spring arms (24'), which resiliently support the locking element (24) in axial direction, are embodied in one piece with the front plate (22).

28. The ring filter insert according to claim 27, **characterized in that** the locking element (24), which is held by means of the spring arms (24'), is connected to the remaining front plate (22) via a latching support (25).

29. The ring filter insert according to any one of claims 16 to 28, **characterized in that** the locking element (24) is embodied in two parts, wherein both parts of the locking element (24) are locked in place with one another so as to allow a compensation of radial measuring tolerances and angle errors.

## Revendications

1. Filtre à liquide (1), en particulier filtre à huile d'un moteur à combustion interne, comportant un boîtier de filtre (10) qui contient un insert de filtre annulaire (2) agencé de manière remplaçable et un couvercle (16) amovible qui ferme le boîtier de filtre (10) pendant le fonctionnement, le boîtier de filtre (10) comportant au moins une admission (11) pour du liquide brut à filtrer, laquelle débouche sur un côté brut (11) du boîtier de filtre (10), et un retour (12) pour du liquide pur filtré, lequel retour part d'un côté pur (12) du boîtier de filtre (10), une ouverture excentrique étant ménagée dans un fond (18) du boîtier de filtre (10), l'insert de filtre (2) étant composé d'un corps de matière filtrante (20) cylindrique creux bordé côté frontal par des disques frontaux (21, 22) et séparant le côté brut (11) et le côté pur (12), un élément de blocage excentrique (24) pour l'ouverture excentrique étant agencé sur le disque frontal (22) tourné vers le fond (18), sur l'insert de filtre annulaire (2) et sur le boîtier de filtre (10) étant prévus des moyens de positionnement qui coopèrent et qui, lors de la mise en place de l'insert de filtre annulaire (2) dans le boîtier de filtre (10), amènent l'élément de blocage (24) en prise avec l'ouverture excentrique, le premier moyen de positionnement étant un plan incliné (3), le deuxième moyen de positionnement étant un ergot (4) en saillie radiale qui est situé en vis-à-vis du plan incliné (3), et le plan incliné (3) et l'ergot (4) pouvant, lorsque l'insert de filtre annulaire (2) subit une rotation par rapport au boîtier de filtre (10), coulisser l'un par rapport à l'autre et l'un le long de l'autre et amenant l'élément de blocage (24) en prise avec l'ouverture excentrique,
**caractérisé en ce que**
a) le plan incliné (3) est réalisé ou situé sur le pourtour extérieur d'une partie de boîtier de filtre (15) située à l'intérieur de l'insert de filtre annulaire (2) et l'ergot en saillie radiale (4), sur le pourtour intérieur de l'insert de filtre annulaire (2) ou
b) le plan incliné (3) est réalisé ou situé sur le pourtour intérieur de l'insert de filtre annulaire (2) et l'ergot en saillie radiale (4), sur le pourtour extérieur de la partie de boîtier de filtre (15) située à l'intérieur de l'insert de filtre annulaire (2)
et
l'ouverture excentrique est une bonde (13) destinée à vider le boîtier de filtre (10) lors du retrait de l'insert de filtre (2).

2. Filtre à liquide selon la revendication 1, **caractérisé en ce que** le plan incliné (3) est formé par deux plans partiels (3.1, 3.2) qui convergent en sens inverse et s'étendent respectivement sur la moitié du pourtour intérieur de l'insert de filtre annulaire (2) ou la moitié du pourtour extérieur de la partie de boîtier de filtre (15) située à l'intérieur de l'insert de filtre annulaire (2).

3. Filtre à liquide selon la revendication 1 ou 2, **caractérisé en ce que** le plan incliné (3) présente une pente qui exclu un autoblocage.

4. Filtre à liquide selon la revendication 1, 2 ou 3, **caractérisé en ce que** fait suite à l'extrémité inférieure du plan incliné (3) un guidage (31) pour l'ergot (4), lequel guidage va dans le sens axial.

5. Filtre à liquide selon la revendication 4, **caractérisé en ce que** le guidage (31) pour l'ergot (4), qui va dans le sens axial, présente tout d'abord, à la suite du plan incliné (3), une première partie de guidage (31.1) d'une largeur (B₁) qui est d'au moins 50 % supérieure à la largeur (B_{N}) de l'ergot (4), et **en ce que** la première partie de guidage (31.1) se prolonge par une deuxième partie de guidage (31.2) qui y fait suite, la largeur (B₂) à ce niveau correspondant à la largeur (B_{N}) de l'ergot (4) majorée d'un jeu de déplacement suffisant pour un déplacement sans coincement de l'ergot (4) dans la deuxième partie de guidage (31.2).

6. Filtre à liquide selon l'une des revendications 1 à 5, **caractérisé en ce que** le plan incliné (3) ou ses plans partiels (3.1, 3.2) est/sont respectivement formé(s) par une nervure ou un degré en saillie radiale formant une glissière (30) pour l'ergot (4) sur le côté supérieur ou inférieur.

7. Filtre à liquide selon l'une des revendications 1 à 6, **caractérisé en ce que** le plan incliné (3) est réalisé d'une seule pièce avec le boîtier de filtre (10) ou avec l'insert de filtre annulaire (2).

8. Filtre à liquide selon l'une des revendications 1 à 6, **caractérisé en ce que** le plan incliné (3) est fabriqué en tant que pièce séparée et est relié au boîtier de filtre (10) ou à l'insert de filtre annulaire (2).

9. Filtre à liquide selon l'une des revendications 1 à 8, **caractérisé en ce que** l'ergot (4) est réalisé d'une seule pièce avec le boîtier de filtre (10) ou avec l'insert de filtre annulaire (2).

10. Filtre à liquide selon l'une des revendications 1 à 9, **caractérisé en ce que** l'élément de blocage (24) est un élément de soupape agencé rigidement sur le disque frontal inférieur (22) et assurant une étanchéité radiale ou axiale, ou un bouchon agencé rigidement sur le disque frontal inférieur (22) et assurant une étanchéité radiale.

11. Filtre à liquide selon l'une des revendications 1 à 9, **caractérisé en ce que** l'élément de blocage (24) est un élément de soupape (24) agencé élastiquement sur le disque frontal inférieur (22) et assurant une étanchéité axiale.

12. Filtre à liquide selon l'une des revendications 1 à 11, **caractérisé en ce que** la bonde (13) est réalisée avec un siège (14) adapté à l'élément de blocage (24), façonné du côté du boîtier de filtre ou mis en place en tant que pièce séparée.

13. Filtre à liquide selon l'une des revendications 1 à 12, **caractérisé en ce que** la partie de boîtier de filtre (15) située à l'intérieur de l'insert de filtre annulaire (2) est un embout tubulaire (15) qui contient le retour (12), qui est solidaire du reste du boîtier de filtre (10) ou est réalisé d'une seule pièce avec celui-ci, ou qui est guidé de manière mobile axialement dans le reste du boîtier de filtre (10) et est précontraint par une force élastique dirigée en direction du couvercle (16).

14. Filtre à liquide selon la revendication 13, **caractérisé en ce que** l'embout tubulaire (15) est relié à un siège (14) adapté à l'élément de blocage (24) ou est réalisé d'une seule pièce avec ledit siège qui est mis en place dans la bonde (13), son axe étant parallèle à celui de l'embout tubulaire (15).

15. Filtre à liquide selon l'une des revendications 1 à 13, **caractérisé en ce que** la bonde (13), vue dans le sens de l'écoulement, présente trois parties de bonde (13.1, 13.2, 13.3) de diamètre à chaque fois plus petit, un canal d'embranchement de bonde (13') d'un composant associé au filtre à liquide (1) et transportant le même liquide débouchant dans la partie de bonde (13.3) dont le diamètre est le plus petit, **en ce que** qu'une pièce tubulaire (5) est agencée de manière déplaçable axialement dans la bonde (13) et est précontrainte par une force élastique dirigée vers le couvercle (16), la pièce tubulaire (5) portant, en son extrémité supérieure, un siège (14) adapté à l'élément de blocage (24) et, en son extrémité inférieure, un premier joint d'étanchéité radial supérieur (51), **en ce que** la pièce tubulaire (5) présente un prolongement (50) qui, partant de son extrémité inférieure, s'étend axialement vers le bas et qui, en son extrémité inférieure, porte un deuxième joint d'étanchéité radial inférieur (52), les joints radiaux (51, 52) coopérant, tout en étant espacés axialement entre eux, avec les parties de bonde (13.2 et 13.3) présentant les deux diamètres plus petits de manière à réaliser une étanchéité et le joint d'étanchéité radial inférieur (52) passant tout d'abord, lorsque la pièce tubulaire (5) va d'une position de base la plus basse vers le haut, au retrait du couvercle (16), de la partie de bonde (13.3) dont le diamètre est le plus petit à la partie de bonde (13.2) présentant le diamètre moyen, tandis que le joint d'étanchéité radial supérieur (51) reste dans la partie de bonde (13.2) présentant le diamètre moyen.

16. Insert de filtre annulaire (2) pour un filtre à liquide (1), en particulier filtre à huile d'un moteur à combustion interne, l'insert de filtre annulaire (2) étant composé d'un corps de matière filtrante (20) cylindrique creux bordé côté frontal par des disques frontaux (21, 22) et pouvant être agencé de manière remplaçable dans un boîtier de filtre (10), un élément de blocage excentrique (24) pour une ouverture excentrique ménagée dans le fond (18) du boîtier de filtre (10) étant disposé sur le disque frontal (22) qui, à l'état monté, est tourné vers un fond (18) du boîtier de filtre (10), des moyens de positionnement étant prévus sur l'insert de filtre annulaire (2), lesquels, lors de la mise en place de l'insert de filtre annulaire (2) dans le boîtier de filtre (10), coopèrent avec des moyens de positionnement prévus sur le boîtier de filtre (10) et amènent l'élément de blocage (24) en prise avec l'ouverture excentrique, le premier moyen de positionnement étant un plan incliné (3) et le deuxième moyen de positionnement étant un ergot (4) en saillie radiale qui est situé en vis-à-vis du plan incliné (3), et le plan incliné (3) et l'ergot (4) pouvant, lorsque l'insert de filtre annulaire (2) subit une rotation par rapport au boîtier de filtre (10), coulisser l'un par rapport à l'autre et l'un le long de l'autre, l'élément de blocage (24) pouvant ainsi être amené en prise avec l'ouverture excentrique,
**caractérisé en ce que**
a) l'ergot en saillie radiale (4) est réalisé ou situé sur le pourtour intérieur de l'insert de filtre annulaire (2) ou
b) le plan incliné (3) est réalisé ou situé sur le pourtour intérieur de l'insert de filtre annulaire (2)

17. Insert de filtre annulaire selon la revendication 16, **caractérisé en ce que** le plan incliné (3) est formé par deux plans partiels (3.1, 3.2) qui convergent en sens inverse et s'étendent respectivement sur la moitié du pourtour intérieur de l'insert de filtre annulaire (2).

18. Insert de filtre annulaire selon la revendication 16 ou 17, **caractérisé en ce qu'**un guidage (31) pour l'ergot (4), qui va dans le sens axial, fait suite à l'extrémité inférieure du plan incliné (3).

19. Insert de filtre annulaire selon la revendication 18, **caractérisé en ce que** le guidage (31) pour l'ergot (4), qui va dans le sens axial, présente tout d'abord, à la suite du plan incliné (3), une première partie de guidage (31.1) d'une largeur (B₁) qui est d'au moins 50 % supérieure à la largeur (B_{N}) de l'ergot (4) et **en ce que** la première partie de guidage (31.1) se prolonge par une deuxième partie de guidage (31.2) qui y fait suite, la largeur (B₂) à ce niveau correspondant à la largeur (B_{N}) de l'ergot (4) majorée d'un jeu de déplacement suffisant pour un déplacement sans coincement de l'ergot (4) dans la deuxième partie de guidage (31.2).

20. Insert de filtre annulaire selon l'une des revendications 16 à 19, **caractérisé en ce que** le plan incliné (3) ou ses plans partiels (3.1, 3.2) est/sont respectivement formé(s) par une nervure ou un degré en saillie radiale formant une glissière (30) pour l'ergot (4) sur le côté supérieur ou inférieur.

21. Insert de filtre annulaire selon l'une des revendications 16 à 20, **caractérisé en ce que** le plan incliné (3) est réalisé d'une seule pièce avec l'insert de filtre annulaire (2).

22. Insert de filtre annulaire selon l'une des revendications 16 à 20, **caractérisé en ce que** le plan incliné (3) est fabriqué en tant que pièce séparée et est relié à l'insert de filtre annulaire (2).

23. Insert de filtre annulaire selon la revendication 21 ou 22, **caractérisé en ce qu'**est situé, à l'intérieur de l'insert de filtre annulaire (2), un mandrin d'appui (23) sur lequel est agencé le plan incliné (3).

24. Insert de filtre annulaire selon l'une des revendications 16 à 20, **caractérisé en ce que** l'ergot (4) est réalisé d'une seule pièce avec l'insert de filtre annulaire (2), et plus particulièrement avec le disque frontal inférieur (22) de celui-ci.

25. Insert de filtre annulaire selon l'une des revendications 16 à 24, **caractérisé en ce que** l'élément de blocage (24) est un élément de soupape agencé rigidement sur le disque frontal inférieur (22) et assurant une étanchéité radiale ou axiale, ou un bouchon agencé rigidement sur le disque frontal inférieur (22) et assurant une étanchéité radiale.

26. Insert de filtre annulaire selon l'une des revendications 16 à 24, **caractérisé en ce que** l'élément de blocage (24) est un élément de soupape (24) agencé élastiquement sur le disque frontal inférieur (22) et assurant une étanchéité axiale.

27. Insert de filtre annulaire selon la revendication 26, **caractérisé en ce que** sont réalisés d'une seule pièce avec le disque frontal (22) deux bras élastiques (24') qui portent l'élément de blocage (24) élastiquement dans le sens axial.

28. Insert de filtre annulaire selon la revendication 27, **caractérisé en ce que** l'élément de blocage (24) porté par les bras élastiques (24') est relié au reste du disque frontal (22) par l'intermédiaire d'un support d'encliquetage (25).

29. Insert de filtre selon l'une des revendications 16 à 28, **caractérisé en ce que** l'élément de blocage (24) est réalisé en deux parties, les deux parties de l'élément de blocage (24) étant encliquetées l'une dans l'autre tout en permettant une compensation de tolérances de mesures radiales et d'erreurs d'angles.
